# EUROPEAN PATENT APPLICATION

(11) **EP 4 184 871 A1**
(43) Date of publication of application: **24.05.2023**
(21) Application number: 22208021.0
(22) Date of filing: 17.11.2022
(51) Int. Cl.: H04L 9/40

(54) **REAL-TIME VISUALIZATIONS OF CYBER-RISK DATA FOR ASSET-BASED HIERARCHIES**

(30) Priority: 18.11.2021 US 202163280922 P; 28.10.2022 US 202218050739
(71) Applicant: Honeywell International Inc., Charlotte, NC 28202 (US)
(72) Inventor: SUBRAMANIAN, Swetha, Charlotte, 28202 (US); KAMATH, Prasad, Charlotte, 28202 (US); VITTAL, Chandrakanth, Charlotte, 28202 (US)
(74) Representative: Haseltine Lake Kempner LLP

(57) **Abstract**

Various embodiments described herein relate to providing spatially-efficient and comprehensive visualization of cyber-risk data associated with a plurality of assets. In one embodiment, a method is provided. The method includes accessing cyber-risk data associated with one or more particular assets of a plurality of assets. The method further includes determining whether the cyber-risk data for each particular asset satisfies one or more visual configuration thresholds, and in accordance with a determination that the cyber-risk data satisfies the thresholds, configuring one or more visual nodes of a hierarchical asset graph for the plurality of assets based at least in part on one or more asset groupings. The one or more visual nodes correspond to the particular assets and are configured to visually indicate the cyber-risk data that satisfies the visual configuration thresholds. The method further includes providing the hierarchical asset graph for display.

## Description

### TECHNICAL FIELD

The present disclosure relates generally to real-time asset analytics and network security. More specifically, this disclosure relates to identification, analysis and assessment, retrospection, and visualization of cybersecurity threats and risks.

### BACKGROUND

Industrial plants and processing facilities are often managed using industrial process control and automation systems, which can be victims of frequency cyber-attacks. Conventional control and automation systems routinely include a variety of networked devices, such as servers, workstations, switches, routers, firewalls, safety systems, proprietary real-time controllers, and industrial field devices, and different devices may originate from different vendors. In industrial environments, cyber-security is of increasing concern, and unaddressed security vulnerabilities in any of these components could be exploited by attackers to disrupt operations or cause unsafe conditions in an industrial facility. To detect or report a threat, it is often useful to efficiently and effectively monitor data from multiple sites or locations at a single system.

### BRIEF SUMMARY

Various embodiments of the present disclosure are directed to visualization of cyber-risks across a plurality of assets that may be hierarchically organized. The present disclosure provides for consolidated enterprise view of cybersecurity data from multiple sites and assets, including but not limited to in industrial control systems and other systems. According to one aspect of the present disclosure, a method is provided. In various embodiments, the method includes accessing cyber-risk data associated with one or more particular assets of a plurality of assets. The method further includes determining whether the cyber-risk data for each particular asset satisfies one or more visual configuration thresholds based at least in part on comparing a risk score of the cyber-risk data for each particular asset to the one or more visual configuration thresholds. The method further includes, in accordance with a determination that the cyber-risk data satisfies the one or more visual configuration thresholds, configuring one or more visual nodes of a hierarchical asset graph for the plurality of assets based at least in part on one or more asset groupings. The one or more visual nodes correspond to the one or more particular assets and are configured to visually indicate the cyber-risk data for each particular asset that satisfies the one or more visual configuration thresholds. The method further includes providing the hierarchical asset graph for display.

In various embodiments, the hierarchical asset graph includes at least one of a plurality of visual nodes corresponding to respective assets or respective asset groupings and a plurality of visual edges. A visual edge connects two particular visual nodes and visually indicates a relationship between the respective assets or the respective asset groupings corresponding to each of the two particular visual nodes.

In various embodiments, the hierarchical asset graph is generated based at least on: generating a first visual node corresponding to a given asset grouping; generating one or more second visual nodes, each second visual node corresponding to a defined asset belonging to the given asset grouping or corresponding to a defined asset grouping belonging to the given asset grouping; and generating one or more visual edges between the first visual node and the one or more second visual nodes. In various embodiments, the first visual node is configured to be dynamically interactable such that, responsive to user interaction with the first visual node, the one or more second visual nodes are configured to be in a condensed state. In various embodiments, an asset grouping is defined to include one or more assets associated with one or more criticality levels satisfying a similarity threshold.

In various embodiments, a visual node corresponding to a particular asset is configured to visually indicate the risk score of the cyber-risk data for the particular asset. In various embodiments, the cyber-risk data includes one or more risk scores associated with one or more particular assets belonging to a particular asset grouping, and a visual node corresponding to the particular asset grouping is configured to visually indicate an aggregated risk score determined based at least on the one or more risk scores associated with the one or more particular assets.

In various embodiments, the method further includes, in accordance with the cyber-risk data satisfying the one or more visual configuration thresholds, configuring a visual edge connecting two visual nodes to visually indicate the cyber-risk data mapped to one or both of the two visual nodes and that satisfies the one or more visual configuration thresholds and/or a network communication status between the one or more visual nodes.

In various embodiments, the method further includes determining a network communication status between two assets corresponding to two visual nodes connected by a visual edge, and configuring the visual edge to visually indicate the network communication status between the two assets. In various embodiments, the method further includes identifying one or more discrete risk events from the cyber-risk data, a discrete risk event being associated with a priority level and a timestamp, and providing an event feed for display, the event feed visually indicating the one or more discrete risk events according to the respective priority levels and/or the respective timestamps.

According to another aspect of the present disclosure, a system including at least one processor and a memory storing executable instructions is provided. In various embodiments, the executable instructions, when executed by the at least one processor, cause the at least one processor to access cyber-risk data associated with one or more particular assets of a plurality of assets. The executable instructions, when executed by the at least one processor, further cause the at least one processor to determine whether the cyber-risk data for each particular asset satisfies one or more visual configuration thresholds based at least in part on comparing a risk score of the cyber-risk data for each particular asset to the one or more visual configuration thresholds. The executable instructions, when executed by the at least one processor, further cause the at least one processor to, in accordance with a determination that the cyber-risk data satisfies the one or more visual configuration thresholds, configure one or more visual nodes of a hierarchical asset graph for the plurality of assets based at least in part on one or more asset groupings. The one or more visual nodes correspond to the one or more particular assets ma and are configured to visually indicate the cyber-risk data for each particular asset that satisfies the one or more visual configuration thresholds. The executable instructions, when executed by the at least one processor, further cause the at least one processor to provide the hierarchical asset graph for display.

In various embodiments, the hierarchical asset graph includes at least one of a plurality of visual nodes corresponding to respective assets or respective asset groupings and a plurality of visual edges. A visual edge connects two particular visual nodes and visually indicates a relationship between the respective assets or the respective asset groupings corresponding to each of the two particular visual nodes.

In various embodiments, the hierarchical asset graph is generated based at least on: generating a first visual node corresponding to a given asset grouping; generating one or more second visual nodes, each second visual node corresponding to a defined asset belonging to the given asset grouping or corresponding to a defined asset grouping belonging to the given asset grouping; and generating one or more visual edges between the first visual node and the one or more second visual nodes. In various embodiments, the first visual node is configured to be dynamically interactable such that, responsive to user interaction with the first visual node, the one or more second visual nodes are configured to be in a condensed state. In various embodiments, an asset grouping is defined to include one or more assets associated with one or more criticality levels satisfying a similarity threshold.

In various embodiments, a visual node corresponding to a particular asset is configured to visually indicate the risk score of the cyber-risk data for the particular asset. In various embodiments, the cyber-risk data includes one or more risk scores associated with one or more particular assets belonging to a particular asset grouping, and a visual node corresponding to the particular asset grouping is configured to visually indicate an aggregated risk score determined based at least on the one or more risk scores associated with the one or more particular assets.

In various embodiments, the executable instructions, when executed by the at least one processor, further cause the at least one processor to, in accordance with the cyber-risk data satisfying the one or more visual configuration thresholds, configure a visual edge connecting two visual nodes to visually indicate the cyber risk data mapped to one or both of the two visual nodes and that satisfies the one or more visual configuration thresholds and/or a network communication status between the one or more visual nodes.

In various embodiments, the executable instructions, when executed by the at least one processor, further cause the at least one processor to determine a network communication status between two assets corresponding to two visual nodes connected by a visual edge, and configure the visual edge to visually indicate the network communication status between the two assets. In various embodiments, the executable instructions, when executed by the at least one processor, further cause the at least one processor to identify one or more discrete risk events from the cyber-risk data, a discrete risk event being associated with a priority level and a timestamp, and provide an event feed for display, the event feed visually indicating the one or more discrete risk events according to the respective priority levels and/or the respective timestamps.

According to yet another aspect of the present disclosure, a non-transitory computer-readable storage medium including one or more programs for execution by one or more processors of a first device is provided. In various embodiments, the one or more programs include instructions which, when executed by the one or more processors, cause the first device to access cyber-risk data associated with one or more particular assets of a plurality of assets. The instructions, when executed by the one or more processors, further cause the first device to determine whether the cyber-risk data for each particular asset satisfies one or more visual configuration thresholds based at least in part on comparing a risk score of the cyber-risk data for each particular asset to the one or more visual configuration thresholds. The instructions, when executed by the one or more processors, further cause the first device to, in accordance with a determination that the cyber-risk data satisfies the one or more visual configuration thresholds, configure one or more visual nodes of a hierarchical asset graph for the plurality of assets based at least in part on one or more asset groupings. The one or more visual nodes correspond to the one or more particular assets and configured to visually indicate the cyber-risk data for each particular asset that satisfies the one or more visual configuration thresholds. The instructions, when executed by the one or more processors, further cause the first device to provide the hierarchical asset graph for display.

In various embodiments, the hierarchical asset graph includes at least one of a plurality of visual nodes corresponding to respective assets or respective asset groupings and a plurality of visual edges. A visual edge connects two particular visual nodes and visually indicates a relationship between the respective assets or the respective asset groupings corresponding to each of the two particular visual nodes.

In various embodiments, the hierarchical asset graph is generated based at least on: generating a first visual node corresponding to a given asset grouping; generating one or more second visual nodes, each second visual node corresponding to a defined asset belonging to the given asset grouping or corresponding to a defined asset grouping belonging to the given asset grouping; and generating one or more visual edges between the first visual node and the one or more second visual nodes. In various embodiments, the first visual node is configured to be dynamically interactable such that, responsive to user interaction with the first visual node, the one or more second visual nodes are configured to be in a condensed state. In various embodiments, an asset grouping is defined to include one or more assets associated with one or more criticality levels satisfying a similarity threshold.

In various embodiments, a visual node corresponding to a particular asset is configured to visually indicate the risk score of the cyber-risk data for the particular asset. In various embodiments, the cyber-risk data includes one or more risk scores associated with one or more particular assets belonging to a particular asset grouping, and a visual node corresponding to the particular asset grouping is configured to visually indicate an aggregated risk score determined based at least on the one or more risk scores associated with the one or more particular assets.

In various embodiments, the instructions, when executed by the one or more processors, further cause the first device to, in accordance with the cyber-risk data satisfying the one or more visual configuration thresholds, configure a visual edge connecting two visual nodes to visually indicate the cyber-risk data mapped to one or both of the two visual nodes and that satisfies the one or more visual configuration thresholds and/or a network communication status between the one or more visual nodes.

In various embodiments, the instructions, when executed by the one or more processors, further cause the first device to determine a network communication status between two assets corresponding to two visual nodes connected by a visual edge, and configure the visual edge to visually indicate the network communication status between the two assets. In various embodiments, the instructions, when executed by the one or more processors, further cause the first device to identify one or more discrete risk events from the cyber-risk data, a discrete risk event being associated with a priority level and a timestamp, and provide an event feed for display, the event feed visually indicating the one or more discrete risk events according to the respective priority levels and/or the respective timestamps.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an exemplary networked computing system environment, in accordance with one or more embodiments described herein;
FIG. 2 illustrates a schematic block diagram of a framework of an IoT platform of the networked computing system, in accordance with one or more embodiments described herein;
FIG. 3 illustrates a system configured for executing techniques, operations, methods, processes and/or the like described herein, in accordance with various embodiments described herein;
FIG. 4 illustrates an example industrial process control and automation system according to various embodiments of the present disclosure;
FIG. 5 illustrates a system for consolidation of cybersecurity data from multiple sites, in accordance with disclosed embodiments;
FIG. 6 illustrates a process in accordance with disclosed embodiments;
FIG. 7 illustrates a high-level architecture diagram in accordance with disclosed embodiments;
FIG. 8 illustrates a process in accordance with disclosed embodiments as can be performed by a risk manager system; and
FIGs. 9 and 10 illustrate examples of graphical user interfaces in accordance with disclosed embodiments
FIG. 11 illustrates another high-level architecture diagram in accordance with various embodiments of the present disclosure;
FIG. 12 illustrates an example of a hierarchical asset graph for visualization of cyber-risk data and representation of asset relationships, in accordance with various embodiments;
FIG. 13 illustrates example graphically-based representation of asset hierarchy and asset groupings as provided by a hierarchical asset, in accordance with various embodiments;
FIG. 14 illustrates example dynamically interactable functionality of a hierarchical asset graph for visualization of cyber-risk data, in accordance with various embodiments;
FIG. 15 illustrates graphically-based representation or visualization of communication conduits and communication statuses between assets and asset groupings as provided by a hierarchical asset graph, in accordance with disclosed embodiments;
FIGs. 16A-C illustrate example indications of cyber risks or cybersecurity threats as provided by a hierarchical asset graph for visualization of cyber-risk data, in accordance with disclosed embodiments;
FIG. 17 illustrates a process in accordance with disclosed embodiments; and
FIG. 18 illustrates an example of a graphical user interface in accordance with disclosed embodiments.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

Industrial plants are victims of frequent cyber-attacks, and successful operation relies upon proactive identification of threats to the critical infrastructure. The critical infrastructure can include various industrial cyber-assets such as servers and workstations, switches, routers, firewalls, safety systems, proprietary real-time controllers and field devices (generally referred to herein interchangeably as "assets"). With an industrial plant or an enterprise including multiple industrial plants including a significantly large number of assets to be monitored for cyber-security risks in some examples, technical challenges exist with regard to monitoring cyber-risk data across an entire industrial plant or enterprise of industrial plants. Specifically, technical challenges including significant loss-of-view with respect to other interfaces and controls and quick user understanding of large volumes of data arise when monitoring cyber-security risks for an industrial plant or enterprise.

Generally, various embodiments of the present disclosure address such technical challenges and provide for comprehensive visualization of cyber-risk data associated with a plurality of assets that are heterogenous and hierarchical, and the visualization is configured to display associations and relationships between different assets. Specifically, in some example embodiments, the visualization is configured as a hierarchical asset graph, or otherwise a graphical-based visualization. In various embodiments, the hierarchical asset graph comprises a plurality of nodes each corresponding an asset or an asset grouping (e.g., a zone of assets), and a node corresponding to an asset grouping may be displayed with a visual edge connected to one or more nodes corresponding to assets belonging to the asset grouping. As such, a general hierarchy of assets can be easily and visually ascertainable through the graphical-based visualization, or the hierarchical asset graph.

Further, in some examples, the hierarchical asset graph may be configured to provide a spatially-efficient visualization of a plurality of assets throughout an entire enterprise, thereby enabling cyber-risk data for different assets to be indicated to a user simultaneously without significant loss of view. In particular, in some example embodiments, each node corresponding to an asset may be configured to both visually indicate (e.g., via color-coding) and explicitly indicate a risk score associated with the asset.

In various embodiments, some nodes of the hierarchical asset graph may be connected via visual edges to represent communication or network connections between corresponding assets. It may be appreciated that if one asset is experiencing significant cyber-risk, another asset communicatively connected to the one asset may also be at risk. Thus, in various embodiments, a visual edge of the hierarchical asset graph are also configured to indicate (e.g., visually via color-coding) cyber-risk data associated with at least one of a connected pair of nodes (or corresponding assets) to thereby indicate to a user of potential spread of cyber-risk or cyber-security threats.

As such, various embodiments provide various technical effects and technical advantages in the field of present disclosure. In particular, functionality provided by a hierarchical asset graph in accordance with various embodiments described herein extend at least from clearly describing hierarchical, logical, and communication-based relationships between different assets in a compact or spatially-efficient manner to indicating cyber-risk data and potential implications thereof (e.g., spread among assets) associated with different assets. As will be understood then, clear visual indicators through the hierarchical asset graph are provided such that a user can quickly and comprehensively monitor cyber-risk data across a plurality of assets throughout an enterprise. In some examples, the hierarchical asset graph and various embodiments described herein preclude a need for users to navigate and traverse through cyber-risk data for individual assets in a tedious manner, and the aggregation and consolidation of cyber-risk data across assets as visualized by the hierarchical asset graph effectively requires fewer user inputs for monitoring of cyber-risks throughout an enterprise.

Thus, as described, various embodiments provide graphically-based representation or visualization of cyber-risk data with minimal loss of view. Specifically, in example embodiments, various embodiments provide graphically-based representation or visualization of industrial cyber assets for improved understanding of logical interconnections and conduits between the assets and the implications thereof. For example, various embodiments graphically represent, indicate, and visualize communication and security statuses between industrial cyber assets. In example embodiments, various embodiments further graphically indicate cyber security risks and enable easy identification of rogue or at-risk assets in an industrial plant or enterprise.

Thus, the present disclosure provides methods, systems, non-transitory computer-readable storage mediums, computer program products, and/or the like for (spatially) efficient visualization of cyber-risk data for a plurality of assets that also meaningfully describes relationships and interconnections between the assets. In one example embodiment, a method is provided, and the method includes accessing cyber-risk data associated with a plurality of assets and mapping the cyber-risk data to one or more particular assets of the plurality of assets. For example, the cyber-risk data may be specific to a few particular assets and/or may describe a cyber-security threat or event that may only be relevant to a particular group of assets.

The method further includes determining whether the cyber-risk data satisfies one or more thresholds and in accordance with a determination that the cyber-risk data satisfies the one or more thresholds, configuring one or more visual nodes of a hierarchical asset graph for the plurality of assets based at least in part on one or more asset groupings. Specifically, the one or more visual nodes correspond to the one or more particular assets mapped to the cyber-risk data and are configured to visually indicate the cyber-risk data that satisfies the one or more thresholds. As one non-limiting example, a visual node may be indicated with a color based at least in part on one or more severity-based thresholds to enable quick understanding by a user of a severity of cyber-risks described by cyber-risk data associated with a corresponding asset.

The method then includes providing the hierarchical asset graph for display. In some embodiments, the hierarchical asset graph may be configured and/or generated at an independent system, a cloud and/or Internet-of-Things platform, and/or the like and subsequently provided (e.g., transmitted) to a local operator station, enterprise controller, plant controller, and/or the like for a user to locally monitor cyber-risk data.

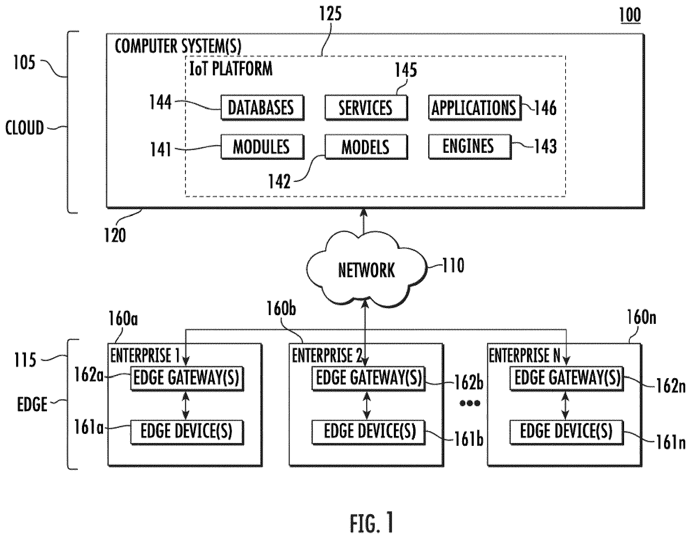

FIG. 1 illustrates an example of a networked computing system environment 100, according to the present disclosure. As shown in FIG. 1, networked computing system environment 100 is organized into a plurality of layers including a cloud layer (e.g., cloud 105), a network layer, and an edge 115. As detailed further below, components of the edge 115 are in communication with components of the cloud 105 via network 110.

In various embodiments, network 110 is any suitable network or combination of networks and supports any appropriate protocol suitable for communication of data to and from components of the cloud 105 and between various other components in the networked computing system environment 100 (e.g., components of the edge 115). According to various embodiments, network 110 includes a public network (e.g., the Internet), a private network (e.g., a network within an organization), or a combination of public and/or private networks. According to various embodiments, network 110 is configured to provide communication between various components depicted in FIG. 1. According to various embodiments, network 110 comprises one or more networks that connect devices and/or components in the network layout to allow communication between the devices and/or components. For example, in one or more embodiments, the network 110 is implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 is implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "IoT" platform 125. It should be appreciated that "IoT platform" is an optional term describing a platform connecting any type of Internet-connected device, and should not be construed as limiting on the types of computing systems useable within IoT platform 125. In particular, in various embodiments, computer systems 120 includes any type or quantity of one or more processors and one or more data storage devices comprising memory for storing and executing applications or software modules of networked computing system environment 100. In one embodiment, the processors and data storage devices are embodied in server-class hardware, such as enterprise-level servers. For example, in an embodiment, the processors and data storage devices comprise any type or combination of application servers, communication servers, web servers, super-computing servers, database servers, file servers, mail servers, proxy servers, and/ virtual servers. Further, the one or more processors are configured to access the memory and execute processor-readable instructions, which when executed by the processors configures the processors to perform a plurality of functions of the networked computing system environment 100.

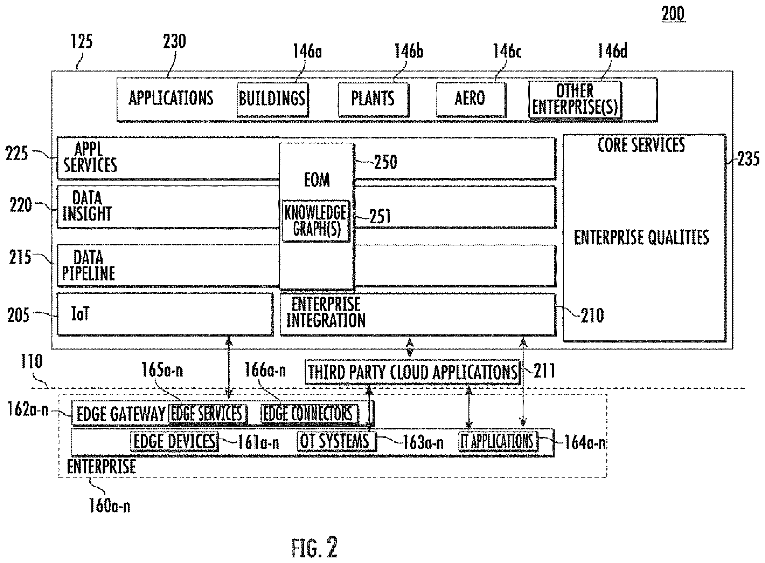

Computer systems 120 further include one or more software components of the IoT platform 125. For example, in one or more embodiments, the software components of computer systems 120 include one or more software modules to communicate with user devices and/or other computing devices through network 110. For example, in one or more embodiments, the software components include one or more modules 141, models 142, engines 143, databases 144, services 145, and/or applications 146, which may be stored in/by the computer systems 120 (e.g., stored on the memory), as detailed with respect to FIG. 2 below. According to various embodiments, the one or more processors are configured to utilize the one or more modules 141, models 142, engines 143, databases 144, services 145, and/or applications 146 when performing various methods and blocks thereof described in this disclosure.

Accordingly, in one or more embodiments, computer systems 120 execute a cloud computing platform (e.g., IoT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 are combined to form fewer modules, models, engines, databases, services, and/or applications. In some embodiments, some of the modules 141, models 142, engines 143, databases 144, services 145, and/or applications 146 are separated into separate, more numerous modules, models, engines, databases, services, and/or applications. In some embodiments, some of the modules 141, models 142, engines 143, databases 144, services 145, and/or applications 146 are removed while others are added.

The computer systems 120 are configured to receive data from other components (e.g., components of the edge 115) of networked computing system environment 100 via network 110. Computer systems 120 are further configured to utilize the received data to produce a result. According to various embodiments, information indicating the result is transmitted to users via user computing devices over network 110. In some embodiments, the computer systems 120 is a server system that provides one or more services including providing the information indicating the received data and/or the result(s) to the users. According to various embodiments, computer systems 120 are part of an entity which include any type of company, organization, or institution that implements one or more IoT services. In some examples, the entity is an IoT platform provider.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n represent any type of entity, facility, or vehicle, such as, for example, companies, divisions, buildings, manufacturing plants, warehouses, real estate facilities, laboratories, aircraft, spacecraft, automobiles, ships, boats, military vehicles, oil and gas facilities, or any other type of entity, facility, and/or entity that includes any number of local devices.

According to various embodiments, the edge devices 161a-161n represent any of a variety of different types of devices that may be found within the enterprises 160a-160n. Edge devices 161a-161n are any type of device configured to access the network 110, or be accessed by other devices through network 110, such as via an edge gateway 162a-162n. According to various embodiments, edge devices 161a-161n are "IoT devices" which include any type of network-connected (e.g., Internet-connected) device. For example, in one or more embodiments, the edge devices 161a-161n include assets, sensors, actuators, processors, computers, valves, pumps, ducts, vehicle components, cameras, displays, doors, windows, security components, boilers, chillers, pumps, air handler units, HVAC components, factory equipment, and/or any other devices that are connected to the network 110 for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, in one or more embodiments, the edge 115 include operational technology (OT) systems 163a-163n and information technology (IT) applications 164a-164n of each enterprise 161a-161n. The OT systems 163a-163n include hardware and software for detecting and/or causing a change, through the direct monitoring and/or control of industrial equipment (e.g., edge devices 161a-161n), assets, processes, and/or events. The IT applications 164a-164n includes network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. According to various embodiments, the communication interfaces of the edge gateways 162a-162n include one or more cellular radios, Bluetooth, Wi-Fi, near-field communication radios, Ethernet, or other appropriate communication devices for transmitting and receiving information. According to various embodiments, multiple communication interfaces are included in each gateway 162a-162n for providing multiple forms of communication between the edge devices 161a-161n, the gateways 162a-162n, and the cloud 105 via network 110. For example, in one or more embodiments, communication are achieved with the edge devices 161a-161n and/or the network 110 through wireless communication (e.g., Wi-Fi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

According to various embodiments, the edge gateways 162a-162n also include a processor and memory for storing and executing program instructions to facilitate data processing. For example, in one or more embodiments, the edge gateways 162a-162n are configured to receive data from the edge devices 161a-161n and process the data prior to sending the data to the cloud 105. Accordingly, in one or more embodiments, the edge gateways 162a-162n include one or more software modules or components for providing data processing services and/or other services or methods of the present disclosure. With reference to FIG. 2, each edge gateway 162a-162n includes edge services 165a-165n and edge connectors 166a-166n. According to various embodiments, the edge services 165a-165n include hardware and software components for processing the data from the edge devices 161a-161n. According to various embodiments, the edge connectors 166a-166n include hardware and software components for facilitating communication between the edge gateway 162a-162n and the cloud 105 via network 110, as detailed above. In some cases, any of edge devices 161a-n, edge connectors 166a-n, and edge gateways 162a-n have their functionality combined, omitted, or separated into any combination of devices. In other words, an edge device and its connector and gateway need not necessarily be discrete devices.

FIG. 2 illustrates a schematic block diagram of framework 200 of the IoT platform 125, according to the present disclosure. The IoT platform 125 of the present disclosure is a platform for enterprise performance management that uses real-time accurate models and visual analytics to deliver intelligent actionable recommendations and/or analytics for sustained peak performance of the enterprises 160a-160n. The IoT platform 125 is an extensible platform that is portable for deployment in any cloud or data center environment for providing an enterprise-wide, top to bottom view, displaying the status of processes, assets, people, and safety. Further, the IoT platform 125 supports end-to-end capability to execute digital twins against process data and to translate the output into actionable insights, using the framework 200, detailed further below.

As shown in FIG. 2, the framework 200 of the IoT platform 125 comprises a number of layers including, for example, an IoT layer 205, an enterprise integration layer 210, a data pipeline layer 215, a data insight layer 220, an application services layer 225, and an applications layer 230. The IoT platform 125 also includes a core services layer 235 and an extensible object model (EOM) 250 comprising one or more knowledge graphs 251. The layers 205-235 further include various software components that together form each layer 205-235. For example, in one or more embodiments, each layer 205-235 includes one or more of the modules 141, models 142, engines 143, databases 144, services 145, applications 146, or combinations thereof. In some embodiments, the layers 205-235 are combined to form fewer layers. In some embodiments, some of the layers 205-235 are separated into separate, more numerous layers. In some embodiments, some of the layers 205-235 are removed while others may be added.

The IoT platform 125 is a model-driven architecture. Thus, the extensible object model 250 communicates with each layer 205-230 to contextualize site data of the enterprise 160a-160n using an extensible graph-based object model (or "asset model"). In one or more embodiments, the extensible object model 250 is associated with knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 include resource description framework (RDF) graphs. As used herein, an "RDF graph" is a graph data model that formally describes the semantics, or meaning, of information. The RDF graph also represents metadata (e.g., data that describes data). According to various embodiments, knowledge graphs 251 also include a semantic object model. The semantic object model is a subset of a knowledge graph 251 that defines semantics for the knowledge graph 251. For example, the semantic object model defines the schema for the knowledge graph 251.

As used herein, EOM 250 includes a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, in one or more embodiments, the model describes the type of sensors mounted on any given asset (e.g., edge device 161a-161n) and the type of data that is being sensed by each sensor. According to various embodiments, a KPI framework is used to bind properties of the assets in the extensible object model 250 to inputs of the KPI framework. Accordingly, the IoT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the IoT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the IoT platform 125 so that the corresponding applications 146 understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 250 can automatically map the tag to the attribute based on naming conventions, parsing, and matching the tag and attribute descriptions and/or by comparing the behavior of the time series data with expected behavior. In one or more embodiments, each of the key attribute contributing to one or more metrics to drive a dashboard is marked with one or more metric tags such that a dashboard visualization is generated.

The modeling phase includes an onboarding process for syncing the models between the edge 115 and the cloud 105. For example, in one or more embodiments, the onboarding process includes a simple onboarding process, a complex onboarding process, and/or a standardized rollout process. The simple onboarding process includes the knowledge graph 250 receiving raw model data from the edge 115 and running context discovery algorithms to generate the model. The context discovery algorithms read the context of the edge naming conventions of the edge devices 161a-161n and determine what the naming conventions refer to. For example, in one or more embodiments, the knowledge graph 250 receives "TMP" during the modeling phase and determine that "TMP" relates to "temperature." The generated models are then published. The complex onboarding process includes the knowledge graph 250 receiving the raw model data, receiving point history data, and receiving site survey data. According to various embodiments, the knowledge graph 250 then uses these inputs to run the context discovery algorithms. According to various embodiments, the generated models are edited and then the models are published. The standardized rollout process includes manually defining standard models in the cloud 105 and pushing the models to the edge 115.

The IoT layer 205 includes one or more components for device management, data ingest, and/or command/control of the edge devices 161a-161n. The components of the IoT layer 205 enable data to be ingested into, or otherwise received at, the IoT platform 125 from a variety of sources. For example, in one or more embodiments, data is ingested from the edge devices 161a-161n through process historians or laboratory information management systems. The IoT layer 205 is in communication with the edge connectors 165a-165n installed on the edge gateways 162a-162n through network 110, and the edge connectors 165a-165n send the data securely to the IoT platform 125. In some embodiments, only authorized data is sent to the IoT platform 125, and the IoT platform 125 only accepts data from authorized edge gateways 162a-162n and/or edge devices 161a-161n. According to various embodiments, data is sent from the edge gateways 162a-162n to the IoT platform 125 via direct streaming and/or via batch delivery. Further, after any network or system outage, data transfer will resume once communication is re-established and any data missed during the outage will be backfilled from the source system or from a cache of the IoT platform 125. According to various embodiments, the IoT layer 205 also includes components for accessing time series, alarms and events, and transactional data via a variety of protocols.

The enterprise integration layer 210 includes one or more components for events/messaging, file upload, and/or REST/OData. The components of the enterprise integration layer 210 enable the IoT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the IoT platform 125. The enterprise integration layer 210 also enables the IoT platform 125 to communicate with the OT systems 163a-163n and IT applications 164a-164n of the enterprise 160a-160n. Thus, the enterprise integration layer 210 enables the IoT platform 125 to receive data from the third-party applications 211 rather than, or in combination with, receiving the data from the edge devices 161a-161n directly.

The data pipeline layer 215 includes one or more components for data cleansing/enriching, data transformation, data calculations/aggregations, and/or API for data streams. Accordingly, in one or more embodiments, the data pipeline layer 215 pre-processes and/or performs initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, cleansed data is run through enterprise-specific digital twins. According to various embodiments, the enterprise-specific digital twins include a reliability advisor containing process models to determine the current operation and the fault models to trigger any early detection and determine an appropriate resolution. According to various embodiments, the digital twins also include an optimization advisor that integrates real-time economic data with real-time process data, selects the right feed for a process, and determines optimal process conditions and product yields.

According to various embodiments, the data pipeline layer 215 employs models and templates to define calculations and analytics. Additionally or alternatively, according to various embodiments, the data pipeline layer 215 employs models and templates to define how the calculations and analytics relate to the assets (e.g., the edge devices 161a-161n). For example, in an embodiment, a pump template defines pump efficiency calculations such that every time a pump is configured, the standard efficiency calculation is automatically executed for the pump. The calculation model defines the various types of calculations, the type of engine that should run the calculations, the input and output parameters, the preprocessing requirement and prerequisites, the schedule, etc. According to various embodiments, the actual calculation or analytic logic is defined in the template or it may be referenced. Thus, according to various embodiments, the calculation model is employed to describe and control the execution of a variety of different process models. According to various embodiments, calculation templates are linked with the asset templates such that when an asset (e.g., edge device 161a-161n) instance is created, any associated calculation instances are also created with their input and output parameters linked to the appropriate attributes of the asset (e.g., edge device 161a-161n).

According to various embodiments, the IoT platform 125 supports a variety of different analytics models including, for example, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 160a-160n performance to identify issues or opportunities, and the potential causes or drivers of the issues or opportunities. The IoT platform 125 includes rich hierarchical symptom-fault models to identify abnormal conditions and their potential consequences. For example, in one or more embodiments, the IoT platform 125 drill downs from a high-level condition to understand the contributing factors, as well as determining the potential impact a lower level condition may have. There may be multiple fault models for a given enterprise 160a-160n looking at different aspects such as process, equipment, control, and/or operations. According to various embodiments, each fault model identifies issues and opportunities in their domain, and can also look at the same core problem from a different perspective. According to various embodiments, an overall fault model is layered on top to synthesize the different perspectives from each fault model into an overall assessment of the situation and point to the true root cause.

According to various embodiments, when a fault or opportunity is identified, the IoT platform 125 provides recommendations about an optimal corrective action to take. Initially, the recommendations are based on expert knowledge that has been preprogrammed into the system by process and equipment experts. A recommendation services module presents this information in a consistent way regardless of source, and supports workflows to track, close out, and document the recommendation follow-up. According to various embodiments, the recommendation follow-up is employed to improve the overall knowledge of the system over time as existing recommendations are validated (or not) or new cause and effect relationships are learned by users and/or analytics.

According to various embodiments, the models are used to accurately predict what will occur before it occurs and interpret the status of the installed base. Thus, the IoT platform 125 enables operators to quickly initiate maintenance measures when irregularities occur. According to various embodiments, the digital twin architecture of the IoT platform 125 employs a variety of modeling techniques. According to various embodiments, the modeling techniques include, for example, rigorous models, fault detection and diagnostics (FDD), descriptive models, predictive maintenance, prescriptive maintenance, process optimization, and/or any other modeling technique.

According to various embodiments, the rigorous models are converted from process design simulation. In this manner, process design is integrated with feed conditions and production requirement. Process changes and technology improvement provide business opportunities that enable more effective maintenance schedule and deployment of resources in the context of production needs. The fault detection and diagnostics include generalized rule sets that are specified based on industry experience and domain knowledge and can be easily incorporated and used working together with equipment models. According to various embodiments, the descriptive models identifies a problem and the predictive models determines possible damage levels and maintenance options. According to various embodiments, the descriptive models include models for defining the operating windows for the edge devices 161a-161n.

Predictive maintenance includes predictive analytics models developed based on rigorous models and statistic models, such as, for example, principal component analysis (PCA) and partial least square (PLS). According to various embodiments, machine learning methods are applied to train models for fault prediction. According to various embodiments, predictive maintenance leverages FDD-based algorithms to continuously monitor individual control and equipment performance. Predictive modeling is then applied to a selected condition indicator that deteriorates in time. Prescriptive maintenance includes determining an optimal maintenance option and when it should be performed based on actual conditions rather than time-based maintenance schedule. According to various embodiments, prescriptive analysis selects the right solution based on the company's capital, operational, and/or other requirements. Process optimization is determining optimal conditions via adjusting set-points and schedules. The optimized set-points and schedules can be communicated directly to the underlying controllers, which enables automated closing of the loop from analytics to control.

The data insight layer 220 includes one or more components for time series databases (TDSB), relational/document databases, data lakes, blob, files, images, and videos, and/or an API for data query. According to various embodiments, when raw data is received at the IoT platform 125, the raw data is stored as time series tags or events in warm storage (e.g., in a TSDB) to support interactive queries and to cold storage for archive purposes. According to various embodiments, data is sent to the data lakes for offline analytics development. According to various embodiments, the data pipeline layer 215 accesses the data stored in the databases of the data insight layer 220 to perform analytics, as detailed above.

The application services layer 225 includes one or more components for rules engines, workflow/notifications, KPI framework, insights (e.g., actionable insights), decisions, recommendations, machine learning, and/or an API for application services. The application services layer 225 enables building of applications 146a-d. The applications layer 230 includes one or more applications 146a-d of the IoT platform 125. For example, according to various embodiments, the applications 146a-d includes a buildings application 146a, a plants application 146b, an aero application 146c, and other enterprise applications 146d. According to various embodiments, the applications 146 includes general applications 146 for portfolio management, asset management, autonomous control, and/or any other custom applications. According to various embodiments, portfolio management includes the KPI framework and a flexible user interface (UI) builder. According to various embodiments, asset management includes asset performance and asset health. According to various embodiments, autonomous control includes energy optimization and/or predictive maintenance. As detailed above, according to various embodiments, the general applications 146 is extensible such that each application 146 is configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the IoT platform 125. According to various embodiments, the core services 235 include data visualization, data analytics tools, security, scaling, and monitoring. According to various embodiments, the core services 235 also include services for tenant provisioning, single login/common portal, self-service admin, UI library/UI tiles, identity/access/entitlements, logging/monitoring, usage metering, API gateway/dev portal, and the IoT platform 125 streams.

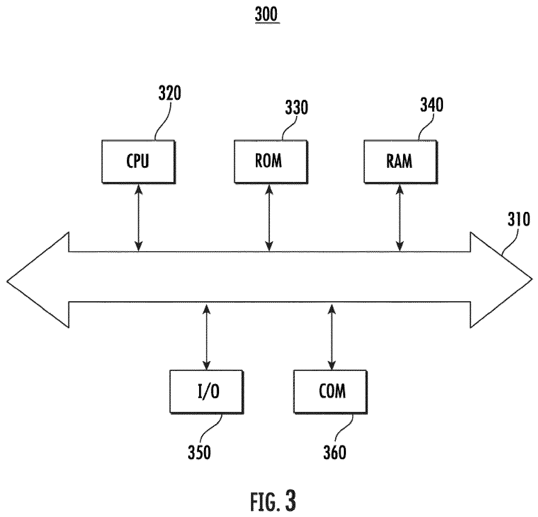

FIG. 3 depicts an example system 300 that is configured to perform and/or execute techniques presented herein. FIG. 3 is a simplified functional block diagram of a computer that may be configured to execute techniques described herein, according to exemplary embodiments of the present disclosure. Specifically, the computer (or "platform" as it may not be a single physical computer infrastructure) may include a data communication interface 360 for packet data communication. The platform also may include a central processing unit ("CPU") 320, in the form of one or more processors, for executing program instructions. The platform may include an internal communication bus 310, and the platform also may include a program storage and/or a data storage for various data files to be processed and/or communicated by the platform such as ROM 330 and RAM 340, although the system 300 may receive programming and data via network communications. The system 300 also may include input and output ports 350 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

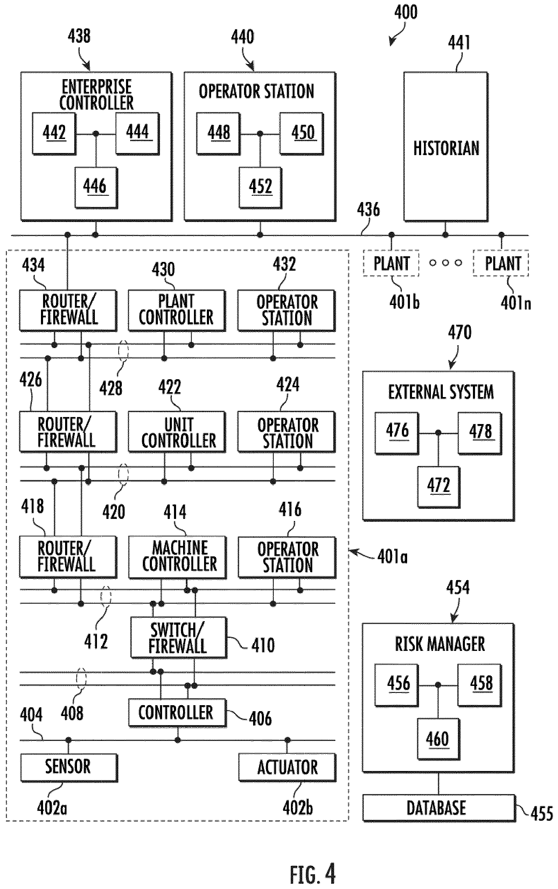

FIG. 4 illustrates an example industrial process control and automation system 400 according to various embodiments of the present disclosure. In various examples, the industrial process control and automation system 400 is, is associated with, is representative of, and/or is an embodiment of an enterprise 160, as described in context of FIG. 1. Thus, at least some or all components of the industrial process control and automation system 400 may be integrated with the networked computing system environment 100 of FIG. 1, for example, to communicate via network 110 with a cloud 105 and/or an IoT platform 125 (and computer systems 120 thereof).

As shown in FIG. 4, the industrial process control and automation (IPCA) system 400 includes various components that facilitate production or processing of at least one product or other material. For instance, the IPCA system 400 is used here to facilitate control over components in one or multiple plants 401a-401n. Each plant 401a-401n represents one or more processing facilities (or one or more portions thereof), such as one or more manufacturing facilities for producing at least one product or other material. In general, each plant 401a-401n may implement one or more processes and can individually or collectively be referred to as a process system. A process system generally represents any system or portion thereof configured to process one or more products or other materials in some manner.

In some examples and the illustrated embodiment of FIG. 4, the IPCA system 400 is implemented using the Purdue model of process control. In the Purdue model, "Level 0" may include one or more sensors 402a and one or more actuators 402b. The sensors 402a and actuators 402b represent components in a process system that may perform any of a wide variety of functions. For example, the sensors 402a could measure a wide variety of characteristics in the process system, such as temperature, pressure, or flow rate. Also, the actuators 402b could alter a wide variety of characteristics in the process system. The sensors 402a and actuators 402b could represent any other or additional components in any suitable process system. Each of the sensors 402a includes any suitable structure for measuring one or more characteristics in a process system. Each of the actuators 402b includes any suitable structure for operating on or affecting one or more conditions in a process system.

At least one network 404 is coupled to the sensors 402a and actuators 402b. The network 404 facilitates interaction with the sensors 402a and actuators 402b. For example, the network 404 could transport measurement data from the sensors 402a and provide control signals to the actuators 402b. The network 404 could represent any suitable network or combination of networks. As particular examples, the network 404 could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers 406, which are coupled to the network 404. Among other things, each controller 406 may use the measurements from one or more sensors 402a to control the operation of one or more actuators 402b. For example, a controller 406 could receive measurement data from one or more sensors 402a and use the measurement data to generate control signals for one or more actuators 402b. Each controller 406 includes any suitable structure for interacting with one or more sensors 402a and controlling one or more actuators 402b. Each controller 406 could, for example, represent a proportional-integral-derivative (PID) controller or a multivariable controller, such as a Robust Multivariable Predictive Control Technology (RMPCT) controller or other type of controller implementing model predictive control (MPC) or other advanced predictive control (APC). As a particular example, each controller 406 could represent a computing device running a real-time operating system.

In some examples, two networks 408 are coupled to the controllers 406. The networks 408 facilitate interaction with the controllers 406, such as by transporting data to and from the controllers 406. The networks 408 could represent any suitable networks or combination of networks. As a particular example, the networks 408 could represent a redundant pair of Ethernet networks, such as a FAULT TOLERANT ETHERNET (FTE) network from HONEYWELL INTERNATIONAL

At least one switch/firewall 410 couples the networks 408 to two networks 412. The switch/firewall 410 may transport traffic from one network to another. The switch/firewall 410 may also block traffic on one network from reaching another network. The switch/firewall 410 includes any suitable structure for providing communication between networks, such as a HONEYWELL CONTROL FIREWALL (CF9) device. The networks 412 could represent any suitable networks, such as an FTE network.

In the Purdue model, "Level 2" may include one or more machine-level controllers 414 coupled to the networks 412. The machine-level controllers 414 perform various functions to support the operation and control of the controllers 406, sensors 402a, and actuators 402b, which could be associated with a particular piece of industrial equipment (such as a boiler or other machine). For example, the machine-level controllers 414 could log information collected or generated by the controllers 406, such as measurement data from the sensors 402a or control signals for the actuators 402b. The machine-level controllers 414 could also execute applications that control the operation of the controllers 406, thereby controlling the operation of the actuators 402b. In addition, the machine-level controllers 414 could provide secure access to the controllers 406. Each of the machine-level controllers 414 includes any suitable structure for providing access to, control of, or operations related to a machine or other individual piece of equipment. Each of the machine-level controllers 414 could, for example, represent a server computing device running a MICROSOFT WINDOWS operating system. Although not shown, different machine-level controllers 414 could be used to control different pieces of equipment in a process system (where each piece of equipment is associated with one or more controllers 406, sensors 402a, and actuators 402b).

One or more operator stations 416 are coupled to the networks 412. The operator stations 416 represent computing or communication devices providing user access to the machine-level controllers 414, which could then provide user access to the controllers 406 (and possibly the sensors 402a and actuators 402b). As particular examples, the operator stations 416 could allow users to review the operational history of the sensors 402a and actuators 402b using information collected by the controllers 406 and/or the machine-level controllers 414. The operator stations 416 could also allow the users to adjust the operation of the sensors 402a, actuators 402b, controllers 406, or machine-level controllers 414. In addition, the operator stations 416 could receive and display warnings, alerts, or other messages or displays generated by the controllers 406 or the machine-level controllers 414. Each of the operator stations 416 includes any suitable structure for supporting user access and control of one or more components in the IPCA system 400. Each of the operator stations 416 could, for example, represent a computing device running a MICROSOFT WINDOWS operating system.

At least one router/firewall 418 couples the networks 412 to two networks 420. The router/firewall 418 includes any suitable structure for providing communication between networks, such as a secure router or combination router/ firewall. The networks 420 could represent any suitable networks, such as an FTE network.

In the Purdue model, "Level 3" may include one or more unit-level controllers 422 coupled to the networks 420. Each unit-level controller 422 is typically associated with a unit in a process system, which represents a collection of different machines operating together to implement at least part of a process. The unit-level controllers 422 perform various functions to support the operation and control of components in the lower levels. For example, the unit-level controllers 422 could log information collected or generated by the components in the lower levels, execute applications that control the components in the lower levels, and provide secure access to the components in the lower levels. Each of the unit-level controllers 422 includes any suitable structure for providing access to, control of, or operations related to one or more machines or other pieces of equipment in a process unit. Each of the unit-level controllers 422 could, for example, represent a server computing device running a MICROSOFT WINDOWS operating system. Although not shown, different unit-level controllers 422 could be used to control different units in a process system (where each unit is associated with one or more machine-level controllers 414, controllers 406, sensors 402a, and actuators 402b).

Access to the unit-level controllers 422 may be provided by one or more operator stations 424. Each of the operator stations 424 includes any suitable structure for supporting user access and control of one or more components in the IPCA system 400. Each of the operator stations 424 could, for example, represent a computing device running a MICRO¬SOFT WINDOWS operating system.

At least one router/firewall 426 couples the networks 420 to two networks 428. The router/firewall 426 includes any suitable structure for providing communication between networks, such as a secure router or combination router/ firewall. The networks 428 could represent any suitable networks, such as an FTE network.

In the Purdue model, "Level 4" may include one or more plant-level controllers 430 coupled to the networks 428. Each plant-level controller 430 is typically associated with one of the plants 401a-401n, which may include one or more process units that implement the same, similar, or different processes. The plant-level controllers 430 perform various functions to support the operation and control of components in the lower levels. As particular examples, the plant-level controller 430 could execute one or more manufacturing execution system (MES) applications, scheduling applications, or other or additional plant or process control applications. Each of the plant-level controllers 430 includes any suitable structure for providing access to, control of, or operations related to one or more process units in a process plant. Each of the plant-level controllers 430 could, for example, represent a server computing device running a MICROSOFT WINDOWS operating system.

Access to the plant-level controllers 430 may be provided by one or more operator stations 432. Each of the operator stations 432 includes any suitable structure for supporting user access and control of one or more components in the IPCA system 400. Each of the operator stations 432 could, for example, represent a computing device running a MICRO¬SOFT WINDOWS operating system.

At least one router/firewall 434 couples the networks 428 to one or more networks 436. The router/firewall 434 includes any suitable structure for providing communication between networks, such as a secure router or combination router/firewall. The network 436 could represent any suitable network, such as an enterprise-wide Ethernet or other network or all or a portion of a larger network (such as the Internet).

In the Purdue model, "Level 5" may include one or more enterprise-level controllers 438 coupled to the network 436. Each enterprise-level controller 438 is typically able to perform planning operations for multiple plants 401a-401n and to control various aspects of the plants 401a-401n. The enterprise-level controllers 438 can also perform various functions to support the operation and control of components in the plants 401a-401n. As particular examples, the enterprise-level controller 438 could execute one or more order processing applications, enterprise resource planning (ERP) applications, advanced planning and scheduling (APS) applications, or any other or additional enterprise control applications. Each of the enterprise-level controllers 438 includes any suitable structure for providing access to, control of, or operations related to the control of one or more plants. Each of the enterprise-level controllers 438 could, for example, represent a server computing device running a MICROSOFT WINDOWS operating system. In the present disclosure, the term "enterprise" may refer to an organization having one or more plants or other processing facilities to be managed. It will be appreciated that if a single plant 401a is to be managed, the functionality of the enterprise-level controller 438 could be incorporated into the plant-level controller 430.

Access to the enterprise-level controllers 438 may be provided by one or more operator stations 440. Each of the operator stations 440 includes any suitable structure for supporting user access and control of one or more components in the IPCA system 400. Each of the operator stations 440 could, for example, represent a computing device running a MICROSOFT WINDOWS operating system. In various embodiments, an operator station 440 at the enterprise-level is configured to provide visualization of cyber-security or cyber-risk data for each device, asset, controller, station, and/or the like of the IPCA system 400, for example, such that an operator or a user may quickly identify cyber-risks for specific components of the IPCA system 400. In some embodiments, the operator station 440 provides a hierarchical asset graph as the visualization of cyber-security or cyber-risk data across the IPCA system 400.

Various levels of the Purdue model can include other components, such as one or more databases. The database(s) associated with each level could store any suitable information associated with that level or one or more other levels of the IPCA system 400. For example, a historian 441 can be coupled to the network 436. The historian 441 could represent a component that stores various information about the IPCA system 400. The historian 441 could, for instance, store information used during production scheduling and optimization. The historian 441 represents any suitable structure for storing and facilitating retrieval of information. Although shown as a single centralized component coupled to the network 436, the historian 441 could be located elsewhere in the IPCA system 400, or multiple historians could be distributed in different locations in the IPCA system 400.

In particular embodiments, the various controllers and operator stations in FIG. 4 may represent computing devices, and more specifically, at least some of the various controllers and operator stations may represent edge devices 161 of an enterprise 160. In various embodiments, each of the controllers 406, 414, 422, 430, 438 could include one or more processing devices 442 and one or more memories 444 for storing instructions and data used, generated, or collected by the processing device(s) 442. Each of the controllers 406, 414, 422, 430, 438 could also include at least one network interface 446, such as one or more Ethernet interfaces or wireless transceivers. Also, each of the operator stations 416, 424, 432, 440 could include one or more processing devices 448 and one or more memories 450 for storing instructions and data used, generated, or collected by the processing device(s) 448. Each of the operator stations 416, 424, 432, 440 could also include at least one network interface 452, such as one or more Ethernet interfaces or wireless transceivers.

In some examples, at least one of the controllers 406, 414, 422, 430, 438 and/or the operator stations 416, 424, 432, 440 embodies or represents the system 300 illustrated in FIG. 3 and comprising a CPU 320, ROM 330, RAM 340, input and output ports 350, data communication interface 360, and/or the like. In some examples, each of the controllers 406, 414, 422, 430, 438 and/or the operator stations 416, 424, 432, 440 embodies or represents the system 300 illustrated in FIG. 3 and comprising a CPU 320, ROM 330, RAM 340, input and output ports 350, data communication interface 360, and/or the like. In some examples, the aggregate of the controllers 406, 414, 422, 430, 438 and/or the operator stations 416, 424, 432, 440 embodies or represents the system 300 illustrated in FIG. 3 and comprising a CPU 320, ROM 330, RAM 340, input and output ports 350, data communication interface 360, and/or the like.

As noted above, cyber-security is of increasing concern with respect to industrial process control and automation systems. Disclosed embodiments include systems and methods that provide a holistic view and visualization of cyber-security data even across systems, sites, or network levels with different access controls. For example, cyber-security data or cyber-risk data across different Purdue levels within a plant 401 may be visualized, as well as cyber-security data or cyber-risk data across different plants 401 of the IPCA system 400 or enterprise 160. In some embodiments, this may be enabled at least in part on through a secure data replication and publication from one or more site risk manager systems to an enterprise risk manager system. It may be appreciated that the "enterprise" risk manager system does not necessarily require that it be enterprise-level from a business standpoint, but rather indicates that the enterprise risk manager system can collect, analyze, and present data from multiple site risk manager systems.

Disclosed embodiments can be used in conjunction with commercial software and services, including but not limited to the HONEYWELL Industrial Enterprise Risk Manager (ERM) software application, for example executing on the enterprise risk manager system, and the commercially available HONEYWELL Industrial Cybersecurity Risk Manager (RM) software application, for example executing on the site risk manager systems.

At least some of the processes and results described herein can be accomplished (among other ways) using a risk manager 454. Among other things, the risk manager 454 supports a technique for replication of identity-derived primary keys without range restrictions.

In this example, the risk manager 454 includes one or more processing devices 456; one or more memories 458 for storing instructions and data used, generated, or collected by the processing device(s) 456; and at least one network interface 460. Each processing device 456 could represent a microprocessor, microcontroller, digital signal process, field programmable gate array, application specific integrated circuit, or discrete logic. Each memory 458 could represent a volatile or non-volatile storage and retrieval device, such as a random access memory or Flash memory. Each network interface 460 could represent an Ethernet interface, wireless transceiver, or other device facilitating external communication. The functionality of the risk manager 454 could be implemented using any suitable hardware or a combination of hardware and software/firmware instructions. In some embodiments, the risk manager 454 includes, or is communication with, a database 455. The database 455 denotes any suitable structure facilitating storage and retrieval of information.

Disclosed embodiments enable the consolidation of risk manager data from a system such as the risk manager 454. The analysis and reporting can also or alternatively be accessed or performed, in some cases, by an external system 470. In this example, the external system 470 includes one or more processing devices 476; one or more memories 478 for storing instructions and data used, generated, or collected by the processing device(s) 476; and at least one network interface 472. Each processing device 476 could represent a microprocessor, microcontroller, digital signal process, field programmable gate array, application specific integrated circuit, or discrete logic. Each memory 478 could represent a volatile or non-volatile storage and retrieval device, such as a random access memory or Flash memory. Each network interface 472 could represent an Ethernet interface, wireless transceiver, or other device facilitating external communication. The functionality of the external system 470 could be implemented using any suitable hardware or a combination of hardware and software/firmware instructions. The external system 470 can be, for example, a stand-alone data processing system, a mobile device, an external server or enterprise system, or otherwise. The exemplary structure of the external system 170 described above is not intended to limit the structure or function of the devices that could be used to implement the external system 170.

In various embodiments, one or more external systems 170 can act as the site risk manager systems when the enterprise risk manager system is implemented as risk manager 154. Conversely, one or more external systems 170 can act as the enterprise risk manager system when the site risk manager system(s) is implemented as risk manager 154. In various embodiments, at least one of the risk manager 454 or the external system 470 may embody or represent the system 300 described in FIG. 3 and accordingly may comprise a CPU 320, ROM 330, RAM 340, input and output ports 350, data communication interface 360, and/or the like. In various embodiments, the risk manager 454 and the external system 470 together embody the system 300 described in FIG. 3. In various embodiments, the risk manager 454 and/or the external system 470 may be configured to provide visualization of cyber-security or cyber-risk data for each device, asset, controller, station, and/or the like of the IPCA system 400, for example, such that an operator or a user may quickly identify cyber-risks for specific components of the IPCA system 400. In some embodiments, the risk manager 454 and/or the external system 470 provides a hierarchical asset graph as the visualization of cyber-security or cyber-risk data across the IPCA system 400.

Although FIG. 4 illustrates one example of an industrial process control and automation system 400, various changes may be made to FIG. 4. For example, a control and automation system could include any number of sensors, actuators, controllers, servers, operator stations, networks, risk managers, and other components. Also, the makeup and arrangement of the IPCA system 400 in FIG. 4 is for illustration only. Components could be added, omitted, combined, or placed in any other suitable configuration according to particular needs. Further, particular functions have been described as being performed by particular components of the IPCA system 400. This is for illustration only. In general, control and automation systems are highly configurable and can be configured in any suitable manner according to particular needs. In addition, FIG. 4 illustrates an example environment in which the functions of the risk manager 454 can be used. This functionality can be used in any other suitable device or system.

Companies that use industrial control systems (ICS) in their plant operations, usually adopt a network security architecture that divides the ICS network into zones, or levels, whereby each level adheres to strict policies specifying from which other levels it will accept data flows. Such zones or levels may be referred interchangeably as asset groupings, device groupings, and/or the like herein. Often, company personnel, acting as decision makers, do not have direct access to certain network levels where key data resides, data which is required to carry out effective decision making by those select personnel. Therefore, critical data that is required by decision makers which is generated at levels possessing restricted access policies will commonly be shared (i.e. copied or replicated) to applications residing on levels with less restrictive policies so that it can be securely accessed. Disclosed embodiments provide a mechanism for sharing data across network levels while adhering to the strict security architecture requirements commonly adopted by the industry. Disclosed embodiments enable company personnel that only possess access to the enterprise risk manager system (such as at a corporate level) to view data generated by site risk manager systems executing within the more highly restricted manufacturing operations and control level. In some embodiments, data generated by one or more site risk manager systems is visualized using a hierarchical asset graph. The enterprise risk manager (ERM) system can execute in the corporate level in various embodiments. Disclosed embodiments can adhere to strict network security policies adopted by companies that use ICS systems while providing direct database-to-database replication of data from multiple site risk manager systems to the enterprise risk manager system.

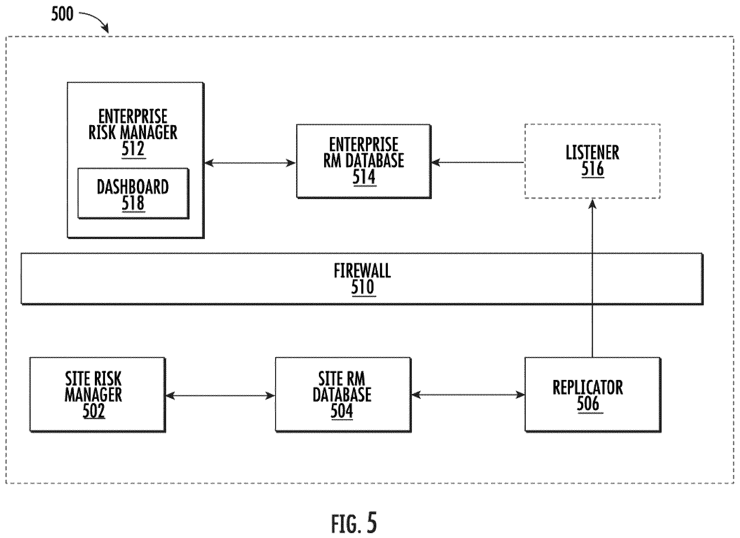

FIG. 5 illustrates an example system architecture 500 for consolidation of cyber-security or cyber-risk data from multiple sites, multiple asset groupings, multiple zones, and/or the like, in accordance with disclosed embodiments. For example, the system architecture 500 enables replication of cyber-security data for different sites, assets groupings, zones, and/or the like to an enterprise-level (e.g., or a higher hierarchical level) risk manager system for holistic analysis.

In the illustrated embodiment, system architecture 500 comprises a single example of a site risk manager (RM) 502 and associated components, but those of skill in the art will recognize that, in a typical implementation, enterprise risk manager (RM) 512 will consolidate data from a plurality of site RMs 502. Referring back to FIG. 4, an IPCA system 400 may include a plurality of risk managers 454 that may belong to different hierarchical levels. For example, an IPCA system 400 may include one or more site risk managers 502 at a plant 401 or site level and may further include one or more enterprise risk managers 512 at an enterprise level that is above the plant 401 or site level in a hierarchy. In accordance with the enterprise hierarchy then, an enterprise risk manager 512 may consolidate data from a plurality of site risk managers 502 for a comprehensive or holistic view and analysis of cyber-security threats and risks across an IPCA system 400 or an enterprise.

As shown in FIG. 5, a site RM 502 (e.g., implemented, embodied, represented by an RM 454) is in communication with a site RM database 504, which can be implemented by the database 455 described in FIG. 4. Similarly, an enterprise RM 512, which can also be implemented by an RM 454 is in communication with an enterprise RM database 514, which can also be implemented by a database 455. It will be understood that any of these databases can be implemented as a single database or as multiple databases.

In various embodiments, the system architecture 500 consolidates cybersecurity data from multiple site RM databases 504 into an enterprise RM database 514, and may preferably do so using a one-way communication through a firewall 510. In various embodiments, a replicator 506 collects data for replication from a site RM database 504 for transmission through the firewall 510. Replicator 506 can be implemented as a data processing system or other device, similar to risk manager 454, with one or more memories, controllers, and other components as will be recognized by those of skill in the art. For example, in some examples, the replicator 506 may be implemented as the system 300. In some example embodiments, replicator 506 can be implemented as a process executing on site RM 502.

In some embodiments, replicator 506 implements a structured query language (SQL) agent that reads the data from site RM database 504, for example using extraction, transformation, and load (ETL) packages for data warehousing, as understood by those of skill in the field of the present disclosure. Data read, retrieved, accessed, and/or the like from site RM database 504 by replicator 506 can be transferred through firewall 510 using, for example, a specified Transmission Control Protocol (TCP) port and forced encryption. The encryption can be certificate or key pair-based, ensuring both secure encryption and authentication of both the sender and receiver. In some examples, replicator 506 may be uniquely configured to transfer data through firewall 510, and in some further examples, the site RMs 502 may not be configured to transfer the data through firewall 510. Thus, the use of the replicator 506 in the system architecture 500 may advantageously limit spread of any cyber-security threat or cyber-risk.

In some examples, the data from replicator 506 is transferred through firewall 510 directly to enterprise RM database 214. In other examples, a listener 516 may be used to "listen" for or detect transactions from replicator 506 and transfer (e.g., write) the received data to enterprise RM database 514.

In some embodiments, replicator 506 implements a MICROSOFT WINDOWS service or similar extractor service that extracts the data from site RM 502 and/or site RM database 504 and transfers the data through firewall 510. The listener 516 can be similarly implemented as a MICROSOFT WINDOWS service that "listens" to a specific port (e.g., a TCP port) of firewall 510, collects the transferred data, and transfers the data to enterprise RM 512 and/or enterprise RM database 514. Any of the communications described herein can be performed over any combination of public or private networks, including the Internet.

Thus, through use of replicator 506, system architecture 500 enables data from multiple site RM databases 504 to be securely and safely consolidated in enterprise RM database 514 through a firewall 510. As such, enterprise RM 512 may then analyze, manipulate, correlate, perform processes on, visualize, and/or the like the consolidated data across multiple sites, asset groupings, zones, and/or the like of an enterprise. In various embodiments, the enterprise RM 512 may display or visualize some or all of the consolidated data in a dashboard 518. The dashboard 518 may include various graphical user interfaces and visualizations of the consolidated cyber-risk data, such that a user (e.g., an operator, an administrator) may monitor and quickly identify cyber-security threats or risks throughout the enterprise and IPCA system 400.

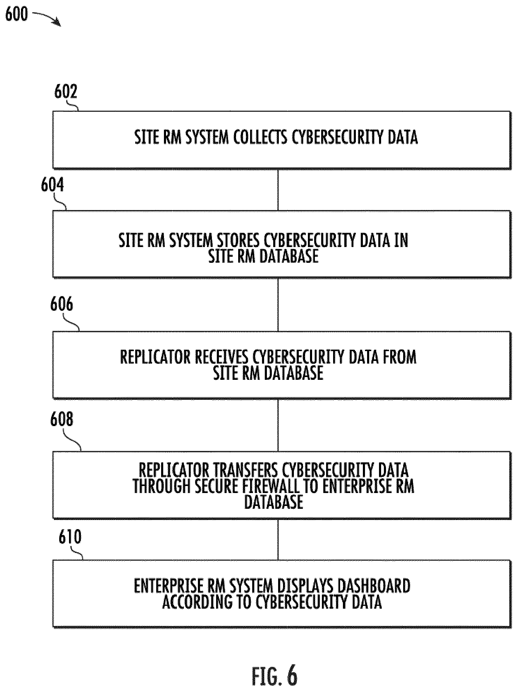

FIG. 6 illustrates a process 600 in accordance with various embodiments, as can be performed by data processing systems of the system architecture 500 as described herein. At block 602, a site RM 502 collects cybersecurity or cyber-risk data from a plurality of devices. The devices can be any of the devices or elements within the IPCA system 400 discussed with respect to FIG. 4. For example, a site RM 502 may be associated with each plant 401 of the enterprise and may accordingly collect cyber-risk data from devices (e.g., sensors and actuators, controllers, operator stations) within each plant 401.

At block 604, the site RM 502 stores the cybersecurity data in a site RM database 504. As previously discussed, the site RM 502 may be embody the RM 454, while the site RM database 504 may embody the database 455. At block 606, a replicator 506 receives the cybersecurity data from site RM database 504. This can be performed as described herein, such as by extractions by an SQL agent or being read by a service, from site RM database 204 directly or through the site RM 502.

At block 608, the replicator 506 transfers the cybersecurity data through a secure firewall 510 to an enterprise RM database 514. This transfer can be directly to the enterprise RM database 514 or to enterprise RM database 514 via enterprise RM 512, and can optionally go through a listener 516 as described herein.

At block 610, enterprise RM 512 displays a dashboard 518 according to the cybersecurity data . This can include consolidating data from multiple site RM 502, and performing other analysis or processing on the cybersecurity data as described herein or known to those of skill in the art. As described, the dashboard 518 may include various graphical user interfaces enabling functionality as described in relation to various embodiments of the present disclosure. In particular, the dashboard 518 may include a hierarchical asset graph configured to both describe associations and relationships between assets of an enterprise and visualize cyber-risk data (e.g., contained in and/or analyzed from the consolidated data) for each asset.

Therefore, disclosed embodiments provide a number of technical advantages and improvements to known devices and systems. Disclosed embodiments provide efficient, secure, and direct database-to-database replication of data generated from site risk manager systems (e.g., site RMs 502) to an enterprise risk manager system (e.g., enterprise RM 512), thereby enabling consolidation of site-specific and portioned cyber-risk data and comprehensive cyber-risk analysis across the enterprise. This can be accomplished, for example, using the capabilities of the MICROSOFT SQL SERVER transactional data replication software products. Disclosed embodiments can ensure that the data is re-created in the exact order necessary to reflect an identical copy of the site source data in the enterprise risk manager system. Disclosed embodiments provide reliable messaging of the data and ensure that no data is lost or skipped over during the replication process.

Further, various disclosed embodiments enforce key network security requirements, such as one-way data transfer from the site risk manager systems to the enterprise risk manager system. Disclosed embodiments can include one-way data transfer from the site risk manager systems to the enterprise risk manager system via an intermediate relay node residing in a "DMZ" level using data packet forwarding techniques. That is, in one example, the intermediate relay node may be implemented as the replicator 506. Disclosed embodiments can include secured transfer of data across levels by enforcing encryption on the TCP channel. In various embodiments, data arriving and stored at the enterprise risk manager system database is "secured at rest" through the use of transparent data encryption techniques.

Various disclosed embodiments can include unique, auto-updating, end-user displays highlighting key cybersecurity information about the site risk manager systems, supporting easy, at-a-glance, visual comparisons of the site risk manager systems.

Disclosed embodiments improve application performance because of the direct database to database data transfers and improve application robustness by use of reliable messaging as part of transactional replication, which can tolerate network outages without losing or skipping over data. Disclosed embodiments improve maintainability of application computer code by exploiting commercially-available replication components rather than developing and maintaining custom data transfer components.

Various embodiments of the present disclosure are further directed to identification, retrospection, and analysis of cyber-security or cyber-risk data. When an abnormal activity is suspected on an industrial plant network (e.g., a particular plant 401 of the IPCA system 400), the cyber security or plant network administrator may want to retrospect and perform in-depth analysis of the abnormal activity during the suspected period. Thus, various disclosed embodiments provide retrospection of cyber-risk data and further support analysis of said cyber-risk data.

Some example analyses of retrospected cyber-risk data include but are not limited to comparison of data of multiple assets (e.g., different plants 401 of the IPCA system 400, devices of different Purdue levels within a plant 401, devices in different geographically-based portions of a plant 401, specifically-selected controllers, specifically-selected operator stations, sensors and actuators 402) in different time lines. This allows review and quick understanding of changes that may have been historically made to an asset in terms of hardware and/or software and/or changes in asset behavior or output within a given time period. As another example to this time-spanning analysis of asset data, multi-level data associated with an asset may be collected when a cyber-risk is suspected on the asset in order to enable discovery of cyber-risk causes and/or sources and to assist in determining subsequent remediation.

These analytical activities with respect to asset data, historical data, cyber-security or cyber-risk data, and/or the like may be dependent upon collection of different logs/data from each of the cyber asset and also may require analytical and network knowledge to perform data massaging. Disclosed embodiments provide an analysis solution that can dynamically bring heterogeneous data into a single platform to perform effective cyber risk analysis, such as by using the risk manager 454. Among other things, the risk manager 454 supports a technique for identification and retrospection of cyber security threats, such as by using the heterogeneous data, in various disclosed embodiments. Thus, efficient analysis and reporting of cyber-risk data and risk manager data is enabled through a system such as the risk manager 454. The analysis and reporting can also or alternatively be accessed or performed, in some cases, by an external system 470.

In various embodiments, such analytical activities may be performed at a plant hierarchical level, such as by using a site RM 502 implemented as the risk manager 454. Additionally or alternatively, the analytical activities may be performed at an enterprise hierarchical level, such as by using an enterprise RM 512 implemented as the risk manager 454.

In various example instances, many assets and end devices may be monitored for identification and/or retrospection of cyber security threats, or cyber-risks, and monitored assets may span across different networks, different Purdue levels of a plant 401, different geographical portions of one or more plants 401, different plants 401, and/or the like. As such, manual efforts to verify and monitor each asset or end device may be infeasible.

To address this, disclosed embodiments provide a visualization component in which the heterogeneous cyber assets being monitored are listed and the users may be able to build scenario based visuals that can aid them to analyze the data and troubleshoot cyber risks. After building the contextual scenarios, users can playback the events and intercept abnormal activities. The "assets" can include servers and workstations, switches, routers, firewalls, safety systems, proprietary real-time controllers and field devices, zones or asset groupings identifying multiple devices, and any other devices in the IPCA system 400.

In various embodiments, the risk manager 454 can display an asset hierarchy which has custom procedures to identify the cyber assets that have been added and removed from the IPCA system 400. In various embodiments disclosed herein, the visualization of the heterogenous cyber assets is in the form of a hierarchical asset graph that describes associations and relationships between different assets. The entry and exit of devices is recorded in a storage such as database 455. This visualization identifies the multiple entries and exits of each asset and displays them under all the hierarchy where it belonged to during its lifecycle. In various embodiments, the assets can be added for cyber-risk monitoring and/or analysis through interactable mechanisms (e.g., drag and drop) in asset visualizations provided through a user interface.

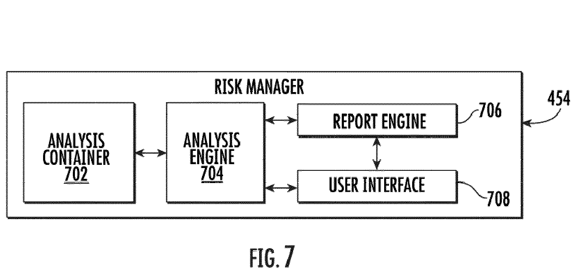

Referring now to FIG. 7, a high level architecture diagram in accordance with disclosed embodiments is provided, and the high level architecture diagram may be implemented in a risk manager 454 (e.g., site RM 502, enterprise RM 512).

As illustrated, the risk manager 454 may comprise an analysis container 702 that represents related data for an asset or group of assets (e.g., a zone of assets). The analysis container 702 can include any data such as asset information used by an analysis engine 704 for further processing, and the analysis container 702 can manage a plurality of other data containers storing data corresponding to various assets, including current and historical cyber-risk data. In some examples, an analysis container 702 may include current and historic Key Performance Indicators (KPIs) that provide metrics on how cyber risks are managed in relation to an asset. In some examples, the analysis container 702 can dynamically create data containers for sending data to other devices or processes. For example, one analysis container 702 might show a trend of the calculated risk scores for all devices in a single zone over a period of thirty days. This analysis container 702 could be represented in the analysis view of user interface 708 as a trend with a legend showing each value for each asset over that period. A single analysis view can have one to many analysis containers 702. Mismatched data types are typically not shown in the same container; e.g., a trended risk score would not be shown with a KPI for current site risk, or a trend of a device would not be shown mixed into a trend of distributed sites. The view can include data corresponding to analysis container 702 or any data container managed or sent by analysis container 702.

In various embodiments, the analysis engine 704 processes any asset under investigation with the current and the historized risk manager data to get the relevant data for generating analysis. For example, if an analysis container 702 describes data for five devices (e.g., assets) and is evaluating the risk score of each device, the analysis engine 704 can query the "risk score" parameter for each device within the currently selected time range. The resulting data set or analysis may then be passed to a report engine 706 or the user interface 708 for display, and can be sent in a data container. In various embodiments, the output of the analysis engine 704 is in the form of a generated report that can be saved, exported, and/or shared among different users. Further the output of the analysis engine 704 can be saved as a template and reused later to build on demand reports and scheduled reports. Various embodiments include multiple system-built reports available for each site which may include data analysis of sites, zones, threats, vulnerabilities, backup risks, patch risks, and current inventory.

In various embodiments, assets can be added to the analysis performed by the analysis engine 704 through interactable mechanisms provided via the user interface 708, such as a simplified drag and drop feature. An example drag feature associated with a cyber asset identifies critical data of the asset that is required for the analysis. For example, if a cyber asset such as a zone is dragged and dropped, the risk manager 454 may automatically identify data options like risk score, risk area, active risk indicators, etc., for that zone. That is, analysis containers 702 that comprise data associated with that zone may be automatically retrieved and provided to the analysis engine 704 based on the initial action of dragging and dropping an indication of the zone within the user interface 708.

The report engine 706 may further process the data returned from the analysis engine 704 and cause the final analysis to be displayed via the user interface 708. The particular display of data may depend on the current settings including user-selected or user-configured settings. For example, historic trends might be displayed as a single large chart with all lines present or as a stacked series of smaller individual trends. In various embodiments, the asset data can be viewed as a visual in various forms such as tabular, trend, or matrix. Different visual forms for the same data may therefore enable efficient comparison of data and proactively unearth improper configuration and implicit risks. The visual forms available for the data of the asset can also be dynamically determined, in some example embodiments.

In various embodiments, a particular view of analyses provided via the user interface 708 can be saved, or more specifically, the position and contents of various components of the particular view (e.g., dropped items, visual form or type, data options, start date, end date, analysis parameters) may be saved. Thus, when a saved view is loaded at a different date, the latest data can be retrieved.

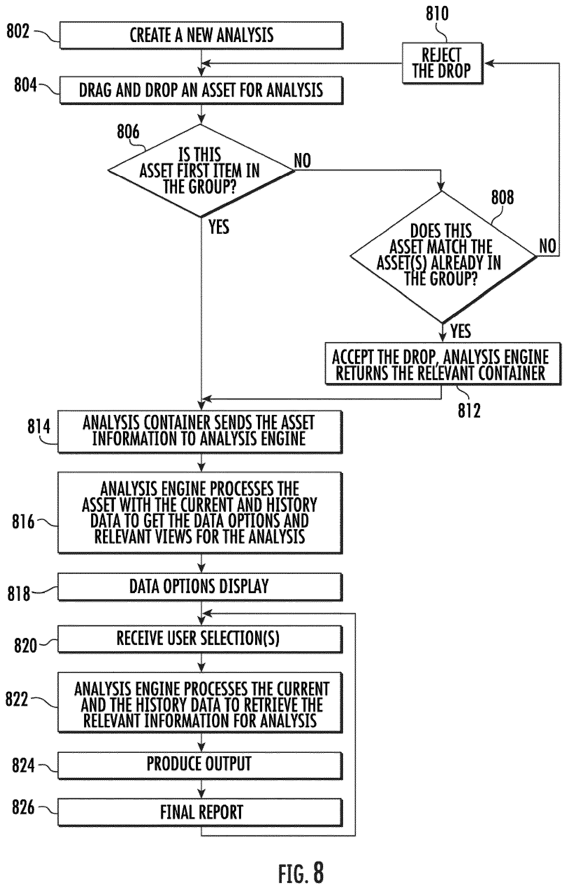

FIG. 8 illustrates a process in accordance with disclosed embodiments as can be performed by a risk manager 454. As previously described, the risk manager 454 may be implemented as and/or embodied by the system 300, and accordingly, the risk manager 454 comprises means, such as CPU 320, ROM 330, RAM 340, input and output ports 350, data communication interface 360, and/or the like, for performing the process illustrated in FIG. 8, in various embodiments. As also discussed, the risk manager 454 performing the process of FIG. 8 may be a site RM 502 analyzing cyber-security threats and cyber-risk data for a plant 401, in some examples. In some other examples, the risk manager 454 performing the process of FIG. 8 may be an enterprise RM 512 analyzing cyber-security across an entire enterprise based at least in part on consolidated data from various sites or plants 401.

At block 802 of the process, the risk manager 454 receives an instruction to create a new analysis, such as via user input or interaction. At block 804, the risk manager 454 then receives a selection of an asset for analysis. The asset may be any one of servers and workstations, switches, routers, firewalls, safety systems, proprietary real-time controllers and field devices (e.g., sensors and actuators, machines), zones or asset groupings identifying multiple devices, and/or any other devices in the IPCA system 400. That is, the asset may be one of a plurality of connected devices that are vulnerable to cyber-security risks. The selection of an asset for analysis may be received based on user interaction with an interactable mechanisms or feature, such as a drag and drop feature. For example, a user may "drag and drop" a visualized icon or other element (e.g., in user interface 708) into a designated portion of a risk manager graphical user interface provided via the user interface 708.

At block 806, the risk manager 454 determines whether the selected asset is the first item in a group. That is, the "first item" refers to the first item to be added to the group for analysis, so that it is the sole item in the group at that point. For example, a user may be interested in analyzing several assets simultaneously and accordingly select assets for analysis sequentially. If the selected asset is not the first item in the group ("No"), the risk manager 454 determines if the selected asset matches the asset(s) already in the group (e.g., previously selected) at block 808. "Matching" can include being of the same type, category, zone, or otherwise. If the selected item does not match the assets already in the group ("No"), then the risk manager 454 may reject the addition of the selected asset to the group of assets for analysis at block 810. If the selected item does match the assets already in the group ("Yes"), then the risk manager 454 accepts the addition of the selected asset at block 812.

If the selected asset is the first item in the group ("Yes") or if the selection of the asset is accepted at block 812, the analysis container 702 causes the data container corresponding to the asset to be provided to the analysis engine 704 at block 814. More generically, the risk manager 454 may receive a data container containing current and historical cyber-risk data corresponding to the asset.

At block 816, the risk manager 454, using the analysis engine 706, processes the asset with the current and historical cyber-risk data of the data container to produce data options and relevant views for the analysis. Different data options may include risk score, risk area, active risk indicators, a data range, a visual form, and/or the like for the asset. At block 818 then, the risk manager 454 causes display, via the user interface 708, of the data options for analysis of the asset.

The risk manager 454 may receive a user selection of one or more data options for analysis of the asset at block 820, and the risk manager may identify relevant portions of the current and historical cyber-risk data, or generally portions of the data container corresponding to the asset, according to the selected data options at block 822.

The risk manager 454 then, using the report engine 706, produces an output corresponding to the asset(s) in the group for analysis, the selection data options, and the identified relevant portions of the current and historical cyber-risk data at block 824. By using both current and historical cyber-risk data, the risk manager 454 may identify and retrospect cyber security threats to the asset(s) in the group. In various embodiments, the analysis engine 704 and/or the report engine 706 includes a rules engine, and the analysis of the asset(s) in the group include a rule-based analysis. The rules engine may process raw data (e.g., current and historical cyber-risk data) and generates actionable risk items. These actionable risk items can be transformed and stored in a database for later retrieval. In some examples, the rules engine may be configured to generate KPIs.

The risk manager 454 displays the output as a report in a graphical user interface provided via the user interface 708, and can also store the report in a database (e.g., generally database 455, site RM database 504, enterprise RM database 514). In examples in which the risk manager 454 is a site RM 502 and generates the report for assets of a plant 401, the report may be replicated for an enterprise RM 512, such as via a replicator 506 and/or in accordance with the system architecture 500 in FIG. 5. In some examples, the risk manager 454 may receive other or additional user selections at block 820 again.

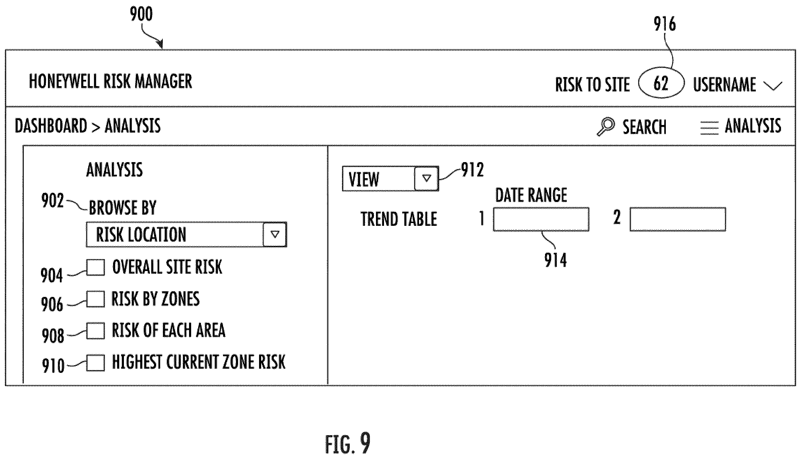

FIG. 9 illustrates an example of a graphical user interface (GUI) 900 in accordance with disclosed embodiments. The GUI 900 may be configured to display data options, such as at block 818. These can include a "browse by" selection 902, such as for browsing by risk location, zone or asset grouping, asset type, or others. Other data options can include overall site risk 904, risk by zones 906, risk at each area 908, or highest current zone risk 910. Further data options can include a view selection 912, such as trend, tabular, matrix, hierarchical asset graph, or other. Data options can further include a date range 914. In various example embodiments, the GUI 900 is configured to display a risk to site value 916, which may be included in a data container corresponding to a selected asset and/or may be generated by the analysis engine 704.

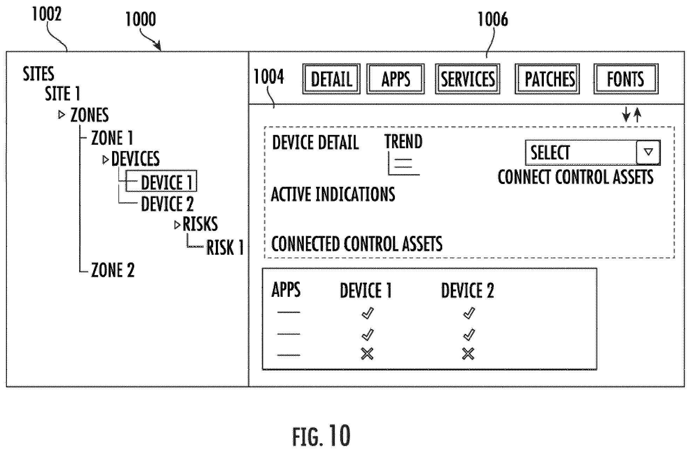

FIG. 10 illustrates an example of another GUI 1000 in accordance with disclosed embodiments. The GUI 1000 includes some elements that can be displayed by the system as part of a dashboard, in some examples. This can include an asset hierarchy 1002 that shows assets arranged, in this example, by sites, zones, and devices. In some examples, the GUI 1000 can include a device detail 1004 including such information as trend data or graphs, active indicators, and control assets. It can include data selectors 1006 for such elements as device detail, apps, services, patches, fonts, and others.

Thus, various embodiments described herein are directed to performing cyber-security and cyber-risk analyses on various assets of an enterprise. As shown through GUIs 900 and 1000, such analysis can be configured and defined with various parameters and data options in order to refine report outputs describing current and/or historical cyber-security threats or cyber-risks faced by selected assets for analysis. In conjunction with the system architecture 500 and process 600, analysis regarding cyber-risks can be replicated for an enterprise-level risk manager system such that cyber-risk data for an entire enterprise or at least for a plurality of assets that may span across different plants 401 or sites can be monitored, analyzed, processed, and/or the like together.

As previously discussed, various embodiments of the present disclosure are directed to graphical visualization of cyber-risk data associated with a plurality of assets and of relationships and/or interconnections among the plurality of assets, and various embodiments provide a hierarchical asset graph. In various embodiments, the hierarchical asset graph visualizes cyber-risk data that may be generated according to the previously described rules engine, the analysis engine 704, the report engine 706, and/or the like. In various embodiments, the hierarchical asset graph is configured to visualize cyber-risk data for a plurality of assets across multiple industrial plants or sites, and in such example embodiments, the hierarchical asset graph is generated and configured at an enterprise-level (e.g., by an enterprise RM 512) using cyber-risk data replicated from multiple different sites or plants through a firewall 510, in accordance with the system architecture 500. In some example embodiments, the hierarchical asset graph is generated and configured within the cloud 105, such as by various computer systems 120 and/or an IoT platform 125, and then provided via network 110 to an edge device 161 of an enterprise 160 for visualization of cyber-risk data for that enterprise 160.

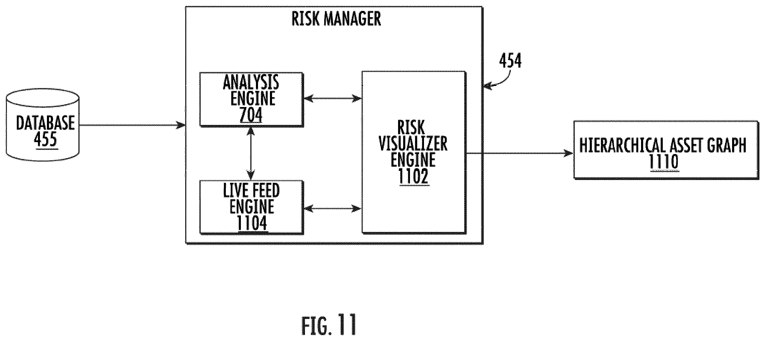

Referring now to FIG. 11, a diagram illustrating an overview including a risk visualizer engine 1105 configured to generate a hierarchical asset graph for graphically-based visualization of cyber-risk data and graphically-based representation of asset relationships and interconnections is provided. Specifically, the diagram illustrates a risk manager 454, which may be and/or may be similar to the risk manager 454 described in FIG. 7. For example, the risk manager 454 includes an analysis engine 704 that may be configured to generate cyber-risk data and analysis outputs for selected assets, in accordance with the process described in FIG. 8. In some examples, the risk manager 454 may be a site RM 502 and may be configured to provide graphically-based visualization of cyber-risk data for an associated site or plant 401. In some other examples, the risk manager 454 may be an enterprise RM 512 and may be configured to provide graphically-based visualization of cyber-risk data across an enterprise including one or more sites or plants 401.

As shown, the risk manager 454 comprises a risk visualizer engine 1102. In various embodiments, the risk visualizer engine 1102 is configured to generate, configured, and update a hierarchical asset graph 1110, and the hierarchical asset graph may be provided via a user interface (e.g., user interface 708) for visual indication to a user of the cyber-risk data from the analysis engine 704. In various embodiments, the risk manager 454, including the analysis engine 704, is configured to read cyber-risk data from the database 455 and/or read data from the database 455 for the generation of cyber-risk data. In some examples, the risk manager 454 may be constrained to only read data from the database 455 and cannot write data to the database 455.

In various embodiments, the risk visualizer engine 1102 is configured to update graphical components of the hierarchical asset graph 1110 while the hierarchical asset graph 1110 is being provided to a user via a user interface. The risk visualizer engine 1102 may access or receive new cyber-risk data for a particular asset and may accordingly update a visual node of the hierarchical asset graph 1110 associated with the particular asset based at least in part on the new cyber-risk data and/or one or more thresholds. For example, the risk visualizer engine 1102 determines that the new cyber-risk data satisfies one or more severity thresholds and accordingly configures or updates the visual node with a color based at least in part on the satisfied severity threshold(s).

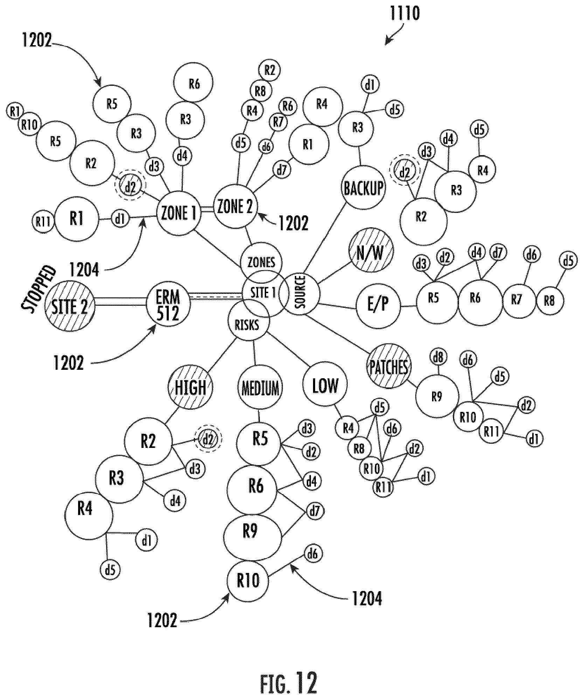

FIG. 12 illustrates an example hierarchical asset graph 1110 that may be generated, configured, updated, and/or the like by the risk visualizer engine 1102 of a risk manager 454. As shown, the hierarchical asset graph 1110 comprises a plurality of visual nodes 1202 and visual edges 1204, and the visual nodes 1202 are connected via visual edges 1204 in a hierarchical manner. In the illustrated embodiment, for example, the hierarchical asset graph 1110 is centered around three visual nodes 1202 corresponding to an enterprise RM 512, a first site or plant 401 (e.g., "Site 1"), and a second site or plant 401 (e.g., "Site 2"), and multiple visual nodes 1202 stem off the visual node 1202 corresponding to "Site 1" via visual edges 1204 and are associated with lower hierarchical levels with respect to "Site 1". For example, the visual nodes 1202 that stem off of the "Site 1" visual node 1202 may be associated with asset groupings or zones of assets, individual assets, and/or the like.

In some example embodiments, some visual nodes 1202 may correspond to specific risks, risk categories, and/or the like. For example, at one hierarchical level, the hierarchical asset graph 1110 includes visual nodes 1202 corresponding to a "High" risk category, a "Medium" risk category, and a "Low" risk category with respect to risks at Site 1. Each of these visual nodes 1202 corresponding to risk categories are connected to other visual nodes 1202 at a lower hierarchical level that may correspond to individual risks, and the other visual nodes 1202 corresponding to individual risks may further be connected to visual nodes 1202 corresponding to devices or assets. Thus, in some example embodiments, the hierarchical asset graph 1110 may provide a graphically-based representation of risk hierarchies and risk categories.

In various embodiments, the hierarchical asset graph 1110 is configured to be interactable by a user via a user interface. In some examples, the hierarchical asset graph 1110 is configured such that a user may select various nodes corresponding to assets or asset groupings to add such assets or asset groupings to a risk analysis, such as in block 804 of FIG. 8.

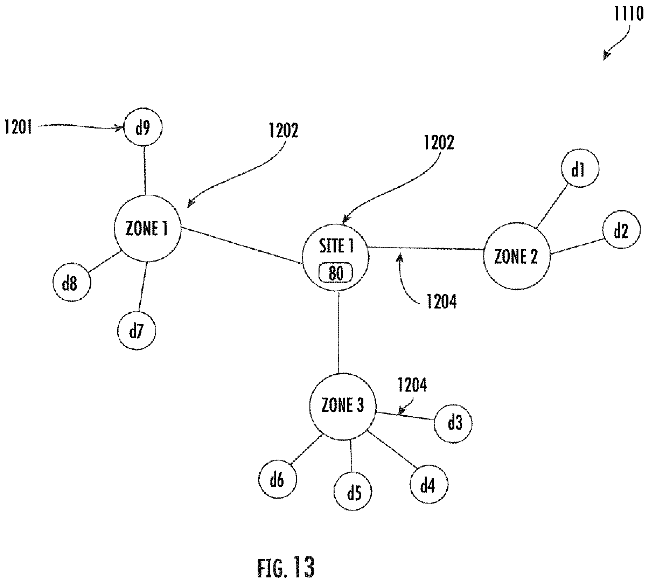

Referring now to FIG. 13, another hierarchical asset graph 1110 is provided, and the hierarchical asset graph 1110 of the illustrated embodiment provides a graphically-based representation of relationships and interconnections between assets at "Site 1" in particular. As shown in FIG. 13, the visual nodes 1202 of a hierarchical asset graph 1110 are hierarchically heterogenous. For instance, the hierarchical asset graph 1110 includes one visual node 1202 at a site-level (e.g., a first asset grouping level), three visual nodes 1202 at a zone-level (e.g., a second asset grouping level), and nine visual nodes 1202 at an asset- or device-level (e.g., an asset level). The hierarchical asset graph 1110 includes visual edges 1204 that connect the visual nodes 1202 between different hierarchical levels, such as to indicate inclusion of assets or asset groupings in a higher-level asset grouping. For instance, three visual nodes associated with three assets or devices are connected via visual edges 1204 to a "Zone 1" visual node, indicating that the three assets or devices belong to Zone 1.

In various embodiments, asset groupings or zones may be based at least in part on geographical locations within a site or plant 401. In some examples, asset groupings or zones may be explicitly defined by a user; for example, a user may group certain assets or devices together based at least in part on involvement in a process or operation or based at least in part on interest in aggregated risk analysis. In some examples, asset groupings or zones include assets or devices of similar criticality levels with respect to certain processes or operations of the site or plant 401. For example, assets that are highly critical to successful operation of the site may be grouped together, while assets that are not critical are grouped together.

FIG. 13 further illustrates the hierarchical asset graph indicating cyber-risk data associated with the plurality of assets and asset groupings. Specifically, in the illustrated embodiment, the "Site 1" visual node 1202 indicates a risk score of 80, and the indicated risk score may be representative or comprehensively describe cyber-risks and risk scores across the assets and asset groupings lower in the hierarchy. As one non-limiting example, the risk score of 80 for Site 1 may be an average of risk scores associated with Zone 1, Zone 2, and Zone 3 of Site 1, and each risk score associated with a zone may also be an average of risk scores associated with the individual assets or devices belonging to the zone. It may be appreciated then that the hierarchical organization of the hierarchical asset graph enables a user to quickly understand what assets or asset groupings may have been relevant in determining the risk score.

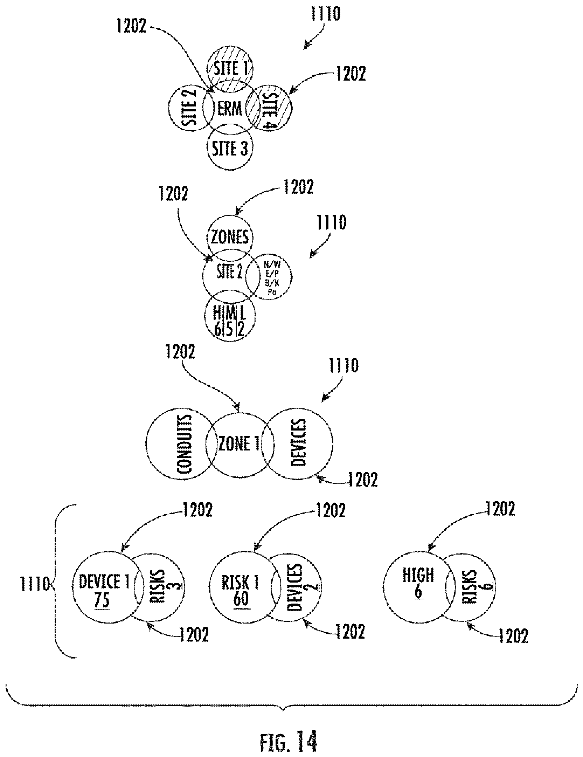

Referring now to FIG. 14, various hierarchical asset graphs 1110 are provided. FIG. 14 specifically demonstrates dynamic arrangement of visual nodes 1202 within a hierarchical asset graph 1110. In various embodiments, each visual node 1202 may be configured to be dynamically interactable such that, responsive to user interaction with a particular visual node, other visual nodes that may stem off the particular visual node may then be arranged and visualized in a condensed, collapsed, or compact state. In FIG. 14 for example, visual nodes 1202 corresponding to different sites or plants 401 (e.g., Site 1, Site 2, Site 3, Site 4) may be condensed at and/or near a visual node 1202 at the enterprise-level and corresponding to an enterprise RM 512 responsive to user interaction (e.g., clicking on, selecting, touching, providing input at) the enterprise-level visual node 1202. In some examples, as demonstrated in FIG. 14, the condensed or compact state may involve merging and/or positioning near of visual nodes 1202 with another visual node 1202 without a visual edge 1204.

In the condensed state, a visual node 1202 may continue indicating cyber-risk data. In some examples, instead of explicitly listing a site-level cyber risk score, a site-level visual node 1202 in the condensed state may indicate the site-level cyber risk score via thresholding and color-coding. As one non-limiting example, the site-level visual node 1202 may indicate a risk score being between 0 and 25 by having a green color, a risk score being between 25 and 75 by having a yellow color, and a risk score being between 75 and 100 by having a red color, for example. Thus, cyber-risk data can continue being conveyed to a user while visual nodes 1202 are in a condensed state.

Thus, as described, FIG. 14 demonstrates condensing or compacting of site-level visual nodes 1202 with an enterprise-level node 1202, and it will be understood that generally, visual nodes 1202 at a lower hierarchical level are condensed or compacted into a visual node 1202 at a higher hierarchical level. FIG. 14 demonstrates visual nodes 1202 describing risk categories, visual nodes 1202 describing zones or asset groupings, and visual nodes 1202 describing network connections or organizations being condensed or compacted into a site-level visual node 1202.

Further into the hierarchy, FIG. 14 demonstrates visual nodes 1202 corresponding to individual devices and conduits being condensed into a zone-level visual node 1202. FIG. 14 includes further examples, such as nodes corresponding to individual risks being compacted with a node corresponding to a device (e.g., to indicate risks of the device), nodes corresponding to different devices being compacted with a node corresponding to a particular risk (e.g., to indicate different devices that have the particular risk), and nodes corresponding to different risks being compacted with a node corresponding to a risk category. As shown in FIG. 14, a hierarchical asset graph 1110 may indicate a number of visual nodes 1202 that are condensed into or compacted with another visual node 1202. For instance, a hierarchical asset graph 1110 may indicate that three nodes each corresponding to an individual risk are condensed into a node corresponding to a device. As another example, a hierarchical asset graph 1110 may indicate that six nodes each corresponding to an individual risk are condensed into a node corresponding to a risk category.

FIG. 14 illustrates various hierarchical asset graphs 1110 arranged in condensed states, which may be in response to user interaction with a visual node 1202. In various embodiments, a hierarchical asset graph 1110 and nodes thereof can be returned to a non-condensed state upon further user interaction with a visual node 1202. For example, a user may toggle one or more visual nodes 1202 being a condensed state and a non-condensed state.

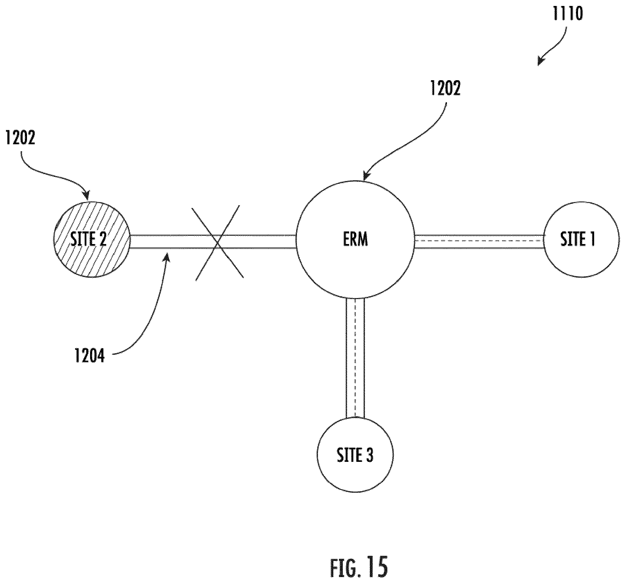

In various embodiments, a hierarchical asset graph 1110 is configured to indicate communication status between assets and asset groupings. FIG. 15 illustrates a hierarchical asset graph 1110 include a visual node 1202 corresponding to an enterprise RM 512 and three visual nodes 1202 corresponding to three sites of the enterprise and visual edges 1204 connecting each of the three site-level visual nodes 1202 to the enterprise-level visual node 1202. In various embodiments, the visual edges 1204 may represent and/or be indicative of a communication status between corresponding assets and asset groupings. As illustrated in FIG. 15, a visual edge 1204 may include a particular indication (e.g., a dotted line spanning the visual edge) if a communication connection between corresponding assets and asset groupings is intact. In the illustrated embodiment, for example, the visual edge 1204 connecting the nodes corresponding to the enterprise RM 512 and Site 1 includes a dotted line to indicate that an intact communication connection between the enterprise RM 512 and Site 1 (e.g., a site RM 502 of Site 1, various assets and devices of Site 1).

In contrast, a visual edge 1204 may include a different indication if a communication connection between corresponding assets and asset groupings has failed. In the illustrated embodiment, for example, the visual edge 1204 connecting nodes corresponding to the enterprise RM 512 and Site 2 includes an intersecting cross indicating that a communication fault has been detected between the enterprise RM 512 and Site 2 (e.g., a site RM 502 of Site 2, various assets and devices of Site 2).

In various embodiments, the risk visualizer engine 1102 is configured to determine or evaluate a communication status between different assets and asset groupings. For instance, the risk visualizer engine 1102 may receive data relating to periodic communication handshakes between assets, or systems and devices thereof, and may be configured to determine whether a communication connection is intact or faulted based at least in part on the periodic communication handshakes (or failure thereof).

Indication of communication status between assets and asset groupings advantageously enables a user, operator, administrator, and/or the like to quickly ascertain and understand avenues through which cyber-risks may spread among an enterprise. Through the indication of communication status between assets and asset groupings that may be experiencing cyber-security threats, a user may quickly understand remedial actions that should be taken to limit spread of the threats, in some examples.

As previously discussed, a user may be aware of specific cyber-security threats or cyber-risk items through indications provided by the hierarchical asset graph 1110. That is, in various embodiments, the hierarchical asset graph 1110 is configured to specifically indicate cyber-risk data as they pertain to specific assets or asset groupings. In some examples, the risk visualizer engine 1102 configures the hierarchical asset graph 1110 with such indications based at least in part on the cyber-risk data satisfying various thresholds (e.g., severity thresholds) that may be configured by a user.

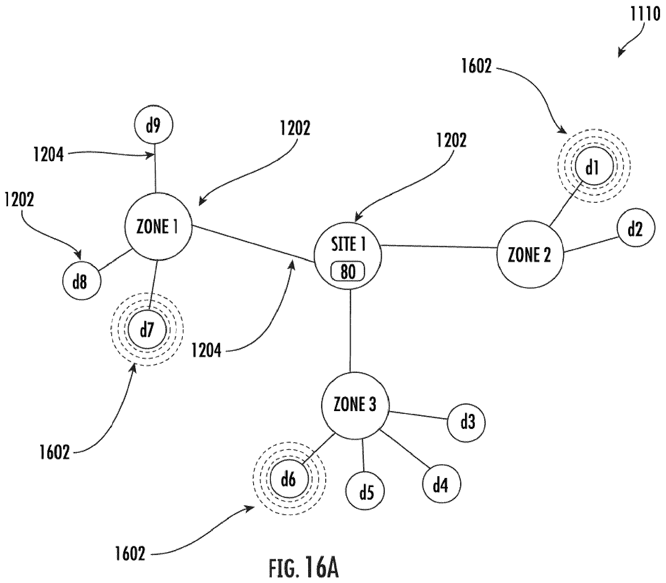

FIGs. 16A-C illustrate examples of indications provided by hierarchical asset graphs 1110 to indicate cyber risks pertaining to particular assets and potential consequences or implications of said cyber risks. Referring first to FIG. 16A, a hierarchical asset graph 1110 including visual nodes 1202 and visual edges 1204 is provided, and the visual nodes 1202 span three hierarchical levels. At one of the hierarchical levels, the visual nodes 1202 correspond to individual devices, which may be sensors and/or actuators, field devices, controllers, machines, workstations, and/or the like. In various embodiments, as shown in FIG. 16A, a visual node 1202 corresponding to an individual device may be configured (e.g., by risk visualizer engine 1102) with a nodal risk indicator 1602. In particular, a nodal risk indicator 1602 may be specific to one visual node 1202 and indicating at least a threshold amount of risk as described by cyber-risk data associated with the corresponding device or asset.

In some examples, the nodal risk indicator 1602 may be dynamic, such as flashing, pulsing, blinking, and/or the like, to attract attention from a user, operator, and/or administrator to the risk for the corresponding individual device. In various embodiments, the nodal risk indicator 1602 may be configured in real-time such that the hierarchical asset graph 1110 immediately or promptly indicates detected risk upon receipt of the cyber-risk data. With nodal risk indicators 1602 being dynamically provided as cyber-risks are detected for individual devices or assets, a user is quickly alerted to cyber-risks. Further, the hierarchical asset graph 1110 provides contextual information for the detected and alerted cyber-risks through the hierarchical arrangement, such that a user may determine what remedial actions need to be taken with regard to the detected and alerted cyber-risks. For example, a user can observe a criticality of the individual device having the cyber-risk in examples in which the zones or groups of assets are criticality-based.

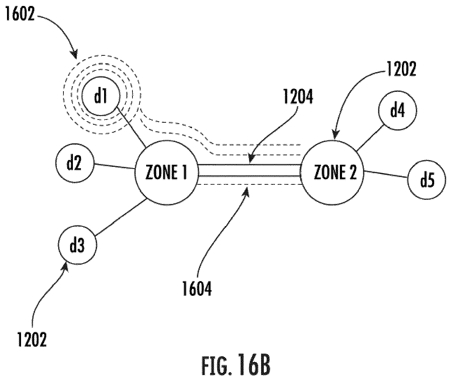

Referring now to FIG. 16B, another example hierarchical asset graph 1110 is provided. In various embodiments, the hierarchical asset graph 1110 is configured to indicate potential consequences of cyber-risks such as spread among other devices or assets. As shown in FIG. 16B, two zone-level visual nodes 1202 are connected via a visual edge 1204, and the visual edge may indicate that a communication status or a communication conduit between the first and second zones corresponding to the two zone-level visual nodes 1202 are intact. Specifically, individual devices belonging to Zone 1 may be in communication with individual devices belonging to Zone 2, as indicated in the illustrated embodiment (e.g., absence of an intersecting cross on the visual edge 1204).

In the illustrated embodiment, a cyber-risk may be detected in relation to an individual device, and the hierarchical asset graph 1110 is configured with a nodal risk indicator 1602 at the visual node 1202 corresponding to the individual device, such as in FIG. 16A. In various embodiments, the hierarchical asset graph 1110 is further configured with an edge risk indicators 1604 along one or more visual edges 1204 based at least in part on the visual node 1202 corresponding to the individual device. The edge risk indicators 1604 may be configured along visual edges 1204 connected at least to the visual node 1202 corresponding to the individual device, and edge risk indicators 1604 may continue past other nodes based at least in part on the status of communication conduits between corresponding assets or asset groupings. For instance, in the illustrated embodiment, a cyber-risk is detected at device d1 of Zone 1, and due to intact communications between Zone 1 and Zone 2, an edge risk indicator 1604 may span the visual edge 1204 connected the nodes for Zone 1 and Zone 2. Thus, with edge risk indicators 1604, a hierarchical asset graph 1110 may indicate potential spread of cyber-risk, further enabling improved determination of remedial actions by a user.

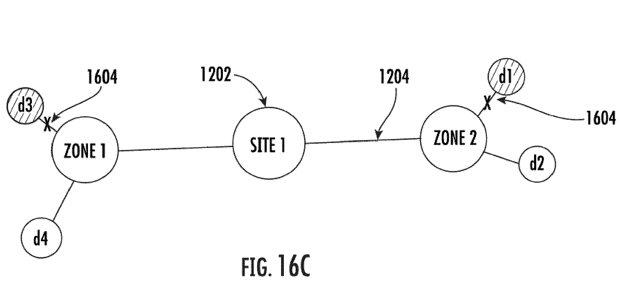

FIG. 16C similarly provides a hierarchical asset graph 1110 configured with edge risk indicators 1604 based at least in part on detected cyber risks at certain assets. In various embodiments, the edge risk indicators 1604 span visual edges 1204 based at least in part on communication status, and in some examples, the communication status or conduit connected to the certain assets are faulted. As such, the edge risk indicators 1604 do not span beyond the visual edges 1204 immediately connected to the nodes corresponding to the certain assets. As such, the hierarchical asset graph 1110 may effectively demonstrate that the certain assets having detected cyber risks are quarantined from other assets, whether by design or by remedial action by a user.

Thus, various functionality provided via a hierarchical asset graph 1110 in accordance with various embodiments is described herein. The hierarchical asset graph 1110 may serve as a graphically-based visualization of cyber-risk data and a graphically-based representation of asset hierarchy, asset characteristics, asset relationships, risk categories, risk organization, and/or the like. Further, the hierarchical asset graph 1110 is configured to indicate communication status between various assets. The hierarchical asset graph 1110 may include specific risk indicators that indicate risk at a particular asset or within an asset grouping, as well as other risk indicators that indicate avenues or conduits through which the cyber risk may spread.

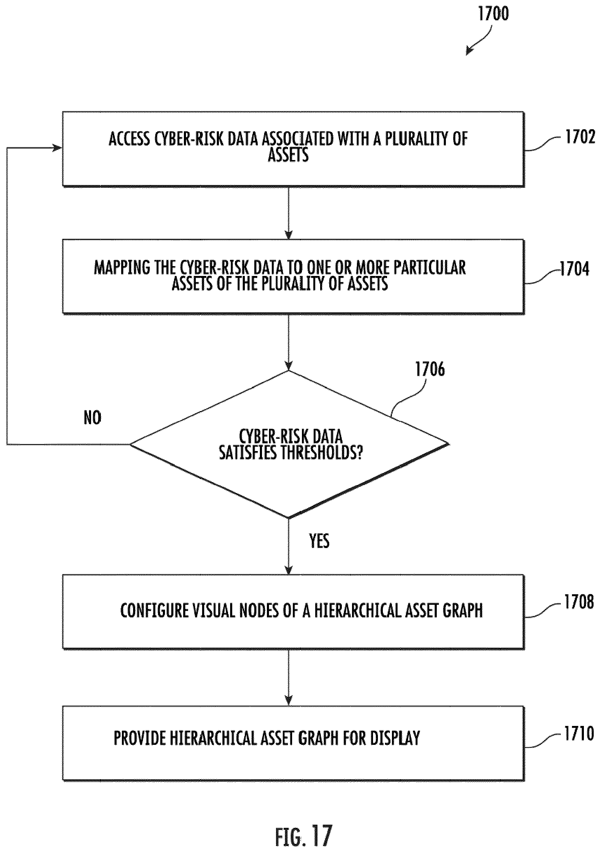

FIG. 17 provides a process 1700 by which the hierarchical asset graph 1110 may be configured. In various embodiments, the process 1700 may be performed repeatedly, periodically, and/or in response to new cyber-risk data being available. As such, a hierarchical asset graph 1110 may be configured, re-configured, and updated. In various embodiments, the process 1700 generally may be performed by the system 300; that is, the system 300 comprises means, such as CPU 320, ROM 330, RAM 340, input and output ports 350, and data communication interface 360, for performing steps and operations of process 1700. In various embodiments, the system 300 may embody, represent, and/or implement a risk manger 454, such as an enterprise RM 512 or a site RM 502.

As shown in FIG. 17, the process 1700 includes accessing cyber-risk data associated with a plurality of assets at block 1702. The plurality of assets may be assets belonging to an enterprise, assets belonging to a site, and/or the like, and the plurality of assets may be represented in a hierarchical asset graph 1110. In various embodiments, the cyber-risk data may be accessed from a database 455, such as a site RM database 504 and/or an enterprise RM database 514. In various embodiments, the cyber-risk data includes risk scores for some assets.

At block 1704, the cyber-risk data is mapped to one or more particular assets of the plurality of assets. For instance, certain assets to which the cyber-risk data pertains are identified. In some example embodiments, the specific visual nodes of a hierarchical asset graph 1110 that correspond to the particular assets are further identified (e.g., in preparation for configuration).

At block 1706, the system 300 determines whether the cyber-risk data satisfies one or more thresholds. Specifically, each portion of the cyber-risk data as pertaining to each particular asset is evaluated against the thresholds in order to determine a proper configuration for each visual node 1202 corresponding to each particular asset. In various embodiments, the one or more thresholds include severity-based thresholds, such that a visual node 1202 can be configured to indicate severity of cyber-risk data. In some examples, the one or more thresholds include event determining thresholds used to determine whether a discrete risk event has occurred based at least in part on the cyber-risk data.

In some examples, if the cyber-risk data does not satisfy any thresholds, the hierarchical asset graph 1110 is not configured or updated, and the system 300 may again access cyber-risk data on a periodic basis and/or as new cyber-risk data becomes available. Otherwise, the process 1700 continues to block 1708, at which visual nodes of the hierarchical asset graph 1110 are configured. In various embodiments, block 1708 further comprises configuring visual edges of the hierarchical asset graph. Specifically, the hierarchical asset graph 1110 is configured with nodal risk indicators at visual node and edge risk indicators along visual edges in accordance with the cyber-risk data and communication statuses between different assets corresponding to the visual nodes.

At block 1710, the hierarchical asset graph 1110 may be provided for display. In various embodiments, the hierarchical asset graph 1110 is provided via a user interface and include interactable mechanisms configured for user interaction. The interactable mechanisms may enable a user to configure arrangement of select visual nodes of the hierarchical asset graph 1110 (e.g., into a condensed or collapsed state), to select certain assets or asset groupings for analysis, and/or the like. In various embodiments, the hierarchical asset graph 1110 is configured to enable a user to control communication between assets or asset groupings.

In various embodiments, the hierarchical asset graph 1110 is further configured to enable a user to add or delete assets or asset groupings from cyber-risk monitoring. Responsive to user interactions indicating the same, the hierarchical asset graph 1110 may be dynamically configured to include added assets or asset groupings according to the hierarchy (e.g., by adding visual nodes and visual edges) and/or to remove selected assets or asset groupings from the hierarchical asset graph 1110.

Returning to FIG. 11, the risk manager 454 includes a live feed engine 1104, in some examples. In various embodiments, the live feed engine 1104 is configured to provide a continuous live feed of active cyber risks, such as via a user interface (e.g., user interface 708). By providing a continuous live feed of active cyber risks, a user may easily isolate and immediately remedy high priority risks at any given point of time. In various embodiments, the continuous live feed of active cyber risks is order based at least in part on a time of detection of each cyber risk; that is, the continuous live feed is chronologically organized. In various embodiments, the live feed engine 1104 is configured to update the continuous live feed periodically based at least in part on a configurable frequency. Additionally or alternatively, the live feed engine 1104 may update the continuous live feed in response to user interaction and/or in response to new cyber risk data being available.

In some examples, the continuous live feed may be filtered based at least in part on various criteria, such as severity of each cyber risk, site to which the cyber risk pertains, asset to which the cyber risk pertains, and/or the like. In various embodiments, the continuous live feed is a portion of the dashboard 518 provided by the enterprise RM 512.

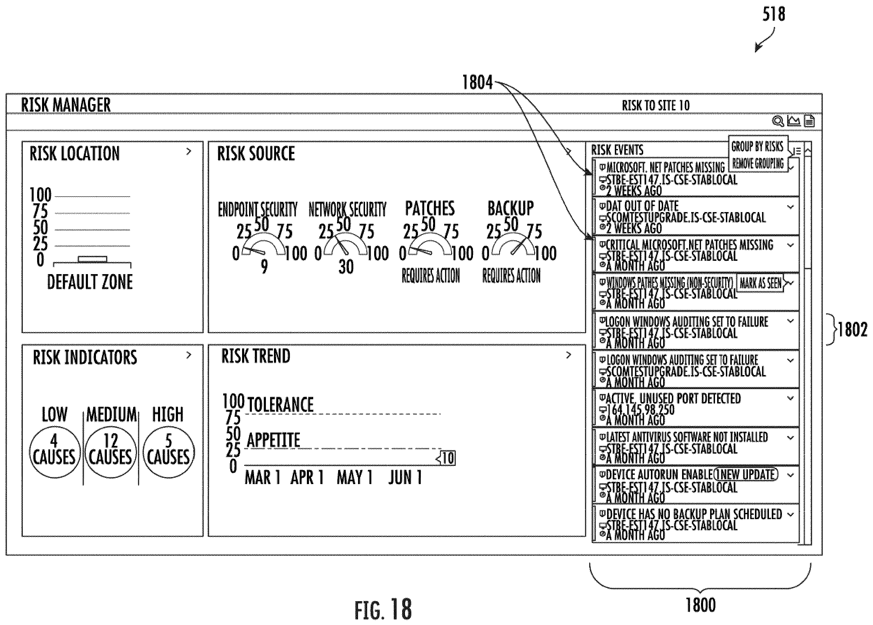

FIG. 18 illustrates an example of a continuous live feed 1800 being provided within a dashboard 518. As shown, the dashboard 518 may include various widgets that include the continuous live feed 1800 as well as widgets that may indicate zones or locations to which various active cyber risks pertain, widgets that may indicate risk categorization (e.g., low, medium, high) and distribution of active cyber risks within such categorization, widgets that indicate historical trends of active cyber risks, and widgets that may indicate risk classifications (e.g., endpoint security, network security, patches, backup). In some embodiments, the dashboard 518 is configured to provide the hierarchical asset graph 1110 as a widget, and in some examples, the hierarchical asset graph 1110 and the continuous live feed 1800 may be provided together within the dashboard 518. In various embodiments, the various widgets provided within the dashboard 518 may be configurable by a user, and a user may select for each of the hierarchical asset graph 1110 and the continuous live feed 1800 to be provided or to not be provided for display.

As illustrated in FIG. 18, the continuous live feed 1800 visually indicates a plurality of discrete risk events 1802. In the illustrated embodiment, for example, ten discrete risk events 1802 are visually indicated at a moment in time. In various embodiments, the continuous live feed 1800 may dynamically add discrete risk events 1802 and may dynamically remove discrete risk events. Discrete risk events 1802 may be added to the continuous live feed 1800 as they are detected, while discrete risk events 1802 may be removed from the continuous live feed 1800 whenever remedial actions have been taken and/or the discrete risk events 1802 have been resolved. Thus, the continuous live feed 1800 provides a list of discrete risk events that are presently applicable or relevant.

In various embodiments, each discrete risk event 1802 may be indicated with a categorization indication 1804. For example, a categorization indication 1804 may describe whether a discrete risk event 1802 is of a low, medium, or high severity, criticality, or risk. In various embodiments, the continuous live feed 1800 is configured to dynamically update the categorization indication 1804 of each discrete risk event 1802 and accordingly provide a notification or alert of such an update. For instance, a discrete risk event 1802 is provided with an alert "1 new update" to indicate that its categorization was recently changed.

As discussed, the discrete risk events 1802 within the continuous live feed 1800 may be organized chronologically; for example, the most recently-detected discrete risk event 1802 may be positioned at the top of the continuous live feed 1800. In some examples, a user may select an alternative organization of discrete risk events 1802 within the continuous live feed 1800. In certain examples, the continuous live feed 1800 is configured to organize the discrete risk events 1802 by categorization (e.g., severity) upon request by a user.

In various embodiments, a discrete risk event 1802 may be removed from the continuous live feed 1800 in certain instances, including when newly received cyber-risk data indicates that the discrete risk event 1802 has been resolved and/or when a user explicitly requests the removal of the discrete risk event 1802 from the continuous live feed 1800. As illustrated in FIG. 18, the continuous live feed 1800 may provide an interactable mechanism enabling a user to mark a discrete risk event 1802 as "seen" to remove the discrete risk event 1802. In some examples, marking a discrete risk event 1802 as "seen" may instead cause the discrete risk even 1802 to be provided with alternative formatting, such as a different background color, different text color, different text font, and/or the like.

Generally then, various embodiments provide a continuous live feed enabling users to be aware of recently detected and active cyber risks and mange such cyber risks accordingly. In conjunction with the hierarchical asset graph 1110, various embodiments provide improved visual indications of cyber-security risks throughout a plurality of assets.

Various embodiments described herein may use or operate in conjunction with any combination or all of various features described in the following previously-filed patent applications (all of which are hereby incorporated by reference):
U.S. Patent Application Ser. No. 14/482,888 entitled "DYNAMIC QUANTIFICATION OF CYBER-SECURITY RISKS IN A CONTROL SYSTEM";
U.S. Provisional Patent Application No. 62/036,920 entitled "ANALYZING CYBER-SECURITY RISKS IN AN INDUSTRIAL CONTROL ENVIRONMENT";
U.S. Provisional Patent Application No. 62/113,075 entitled "RULES ENGINE FOR CONVERTING SYSTEM-RELATED CHARACTERISTICS AND EVENTS INTO CYBER-SECURITY RISK ASSESSMENT VALUES" and corresponding non-provisional U.S. Patent Application Ser. No. 14/871,695;
U.S. Provisional Patent Application No. 62/113,221 entitled "NOTIFICATION SUBSYSTEM FOR GENERATING CONSOLIDATED, FILTERED, AND RELEVANT SECURITY RISK-BASED NOTIFICATIONS" and corresponding non-provisional U.S. patent application Ser. No. 14/871,521;
U.S. Provisional Patent Application No. 62/113,100 entitled "TECHNIQUE FOR USING INFRASTRUCTURE MONITORING SOFTWARE TO COLLECT CYBER-SECURITY RISK DATA" and corresponding non-provisional U.S. Patent Application Ser. No. 14/871,855;
U.S. Provisional Patent Application No. 62/113,186 entitled "INFRASTRUCTURE MONITORING TOOL FOR COLLECTING INDUSTRIAL PROCESS CONTROLAND AUTOMATION SYSTEM RISK DATA" and corresponding non-provisional U.S. Patent Application Ser. No. 14/871,732;
U.S. Provisional Patent Application No. 62/113,165 entitled "PATCH MONITORING AND ANALYSIS" and corresponding non-provisional U.S. Patent Application Ser. No. 14/871,921;
U.S. Provisional Patent Application No. 62/113,152 entitled "APPARATUS AND METHOD FOR AUTO-MATIC HANDLING OF CYBER-SECURITY RISK EVENTS" and corresponding non-provisional U.S. Patent Application Ser. No. 14/871,503;
U.S. Provisional Patent Application No. 62/114,928 entitled "APPARATUS AND METHOD FOR DYNAMIC CUSTOMIZATION OF CYBER-SECURITY RISK ITEM RULES" and corresponding non-provisional U.S. Patent Application Ser. No. 14/871, 605;
U.S. Provisional Patent Application No. 62/114,865 entitled "APPARATUS AND METHOD FOR PRO-VIDING POSSIBLE CAUSES, RECOMMENDED ACTIONS, AND POTENTIAL IMPACTS RELATED TO IDENTIFIED CYBER-SECURITY RISK ITEMS" and corresponding non-provisional U.S. Patent Application Ser. No. 14/871,814; and
U.S. Provisional Patent Application No. 62/114,937 entitled "APPARATUS AND METHOD FOR TYING CYBER-SECURITY RISK ANALYSIS TO COM-MON RISK METHODOLOGIES AND RISK LEV¬ELS" and corresponding non-provisional U.S. Patent Application Ser. No. 14/871,136; and
U.S. Provisional Patent Application No. 62/116,245 entitled "RISK MANAGEMENT IN AN AIR-GAPPED ENVIRONMENT" and corresponding non-provisional U.S. Patent Application Ser. No. 14/871, 547.

In some example embodiments, certain ones of the operations herein can be modified or further amplified as described below. Moreover, in some embodiments additional optional operations can also be included. It should be appreciated that each of the modifications, optional additions or amplifications described herein can be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processor-executable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components can be used in conjunction with the supply management system. Therefore, it is to be understood that the inventions are not to be limited to the specific embodiments disclosed and that modifications and other embodiments are intended to be included within the scope of the appended claims. Moreover, the steps in the method described above can not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

It is intended that the specification and examples be considered as exemplary only, with a true scope and spirit of the disclosure being indicated by the following claims.

## Claims

1. A method comprising:
accessing cyber-risk data associated with one or more particular assets of a plurality of assets;
determining whether the cyber-risk data for each particular asset satisfies one or more visual configuration thresholds based at least in part on comparing a risk score of the cyber-risk data for each particular asset to the one or more visual configuration thresholds;
in accordance with a determination that the cyber-risk data satisfies the one or more visual configuration thresholds, configuring one or more visual nodes of a hierarchical asset graph for the plurality of assets based at least in part on one or more asset groupings, the one or more visual nodes corresponding to the one or more particular assets and configured to visually indicate the cyber-risk data for each particular asset that satisfies the one or more visual configuration thresholds; and
providing the hierarchical asset graph for display.

2. The method of claim 1, wherein the hierarchical asset graph comprises at least one of a plurality of visual nodes corresponding to respective assets or respective asset groupings and a plurality of visual edges, a visual edge connecting two particular visual nodes and visually indicating a relationship between the respective assets or the respective asset groupings corresponding to each of the two particular visual nodes.

3. The method of claim 1, wherein the hierarchical asset graph is generated based at least on:
generating a first visual node corresponding to a given asset grouping;
generating one or more second visual nodes, each second visual node corresponding to a defined asset belonging to the given asset grouping or corresponding to a defined asset grouping belonging to the given asset grouping; and
generating one or more visual edges between the first visual node and the one or more second visual nodes.

4. The method of claim 1, wherein the cyber-risk data comprises one or more risk scores associated with one or more particular assets belonging to a particular asset grouping, and a visual node corresponding to the particular asset grouping is configured to visually indicate an aggregated risk score determined based at least on the one or more risk scores associated with the one or more particular assets.

5. The method of claim 1, further comprising, in accordance with the cyber-risk data satisfying the one or more visual configuration thresholds, configuring a visual edge connecting two visual nodes to visually indicate the cyber-risk data mapped to one or both of the two visual nodes and that satisfies the one or more visual configuration thresholds and/or a network communication status between the one or more visual nodes.

6. The method of claim 1, further comprising:
determining a network communication status between two assets corresponding to two visual nodes connected by a visual edge; and
configuring the visual edge to visually indicate the network communication status between the two assets.

7. The method of claim 1, further comprising:
identifying one or more discrete risk events from the cyber-risk data, a discrete risk event being associated with a priority level and a timestamp; and
providing an event feed for display, the event feed visually indicating the one or more discrete risk events according to the respective priority levels and/or the respective timestamps.

8. A system comprising:
at least one processor; and
a memory storing executable instructions that, when executed by the at least one processor, cause the at least one processor to:
access cyber-risk data associated with one or more particular assets of a plurality of assets;
determine whether the cyber-risk data for each particular asset satisfies one or more visual configuration thresholds based at least in part on comparing a risk score of the cyber-risk data for each particular asset to the one or more visual configuration thresholds;
in accordance with a determination that the cyber-risk data satisfies the one or more visual configuration thresholds, configure one or more visual nodes of a hierarchical asset graph for the plurality of assets based at least in part on one or more asset groupings, the one or more visual nodes corresponding to the one or more particular assets and configured to visually indicate the cyber-risk data for each particular asset that satisfies the one or more visual configuration thresholds; and
provide the hierarchical asset graph for display.

9. The system of claim 8, wherein the hierarchical asset graph comprises at least one of a plurality of visual nodes corresponding to respective assets or respective asset groupings and a plurality of visual edges, a visual edge connecting two particular visual nodes and visually indicating a relationship between the respective assets or the respective asset groupings corresponding to each of the two particular visual nodes.

10. The system of claim 8, wherein the hierarchical asset graph is generated based at least on:
generating a first visual node corresponding to a given asset grouping;
generating one or more second visual nodes, each second visual node corresponding to a defined asset belonging to the given asset grouping or corresponding to a defined asset grouping belonging to the given asset grouping; and
generating one or more visual edges between the first visual node and the one or more second visual nodes.

11. The system of claim 8, wherein the cyber-risk data comprises one or more risk scores associated with one or more particular assets belonging to a particular asset grouping, and a visual node corresponding to the particular asset grouping is configured to visually indicate an aggregated risk score determined based at least on the one or more risk scores associated with the one or more particular assets.

12. The system of claim 8, wherein the executable instructions, when executed by the at least one processor, further cause the at least one processor to, in accordance with the cyber-risk data satisfying the one or more visual configuration thresholds, configure a visual edge connecting two visual nodes to visually indicate the cyber-risk data mapped to one or both of the two visual nodes and that satisfies the one or more visual configuration thresholds and/or a network communication status between the one or more visual nodes.

13. The system of claim 8, wherein the executable instructions, when executed by the at least one processor, further cause the at least one processor to:
determine a network communication status between two assets corresponding to two visual nodes connected by a visual edge; and
configure the visual edge to visually indicate the network communication status between the two assets.

14. The system of claim 8, wherein the executable instructions, when executed by the at least one processor, further cause the at least one processor to:
identify one or more discrete risk events from the cyber-risk data, a discrete risk event being associated with a priority level and a timestamp; and
provide an event feed for display, the event feed visually indicating the one or more discrete risk events according to the respective priority levels and/or the respective timestamps.

15. A non-transitory computer-readable storage medium comprising one or more programs for execution by one or more processors of a first device, the one or more programs including instructions which, when executed by the one or more processors, cause the first device to:
access cyber-risk data associated with one or more particular assets of a plurality of assets;
determine whether the cyber-risk data for each particular asset satisfies one or more visual configuration thresholds based at least in part on comparing a risk score of the cyber-risk data for each particular asset to the one or more visual configuration thresholds;
in accordance with a determination that the cyber-risk data satisfies the one or more visual configuration thresholds, configure one or more visual nodes of a hierarchical asset graph for the plurality of assets based at least in part on one or more asset groupings, the one or more visual nodes corresponding to the one or more particular assets and configured to visually indicate the cyber-risk data for each particular asset that satisfies the one or more visual configuration thresholds; and
provide the hierarchical asset graph for display.
